# EUROPEAN PATENT SPECIFICATION

(11) **EP 1 458 793 B1**
(45) Date of publication and mention of the grant of the patent: **23.04.2008**
(21) Application number: 02793437.1
(22) Date of filing: 27.12.2002
(51) Int. Cl.: C08G 85/00, G03G 9/087

(54) **BINDER RESIN FOR TONER AND ELECTROPHOTOGRAPHIC TONER FOR ELECTROSTATIC DEVELOPING USING SAID RESIN**
BINDEMITTELHARZ FÜR TONER UND ELEKTROPHOTOGRAPHISCHER TONER FÜR DIE ELEKTROSTATISCHE ENTWICKLUNG UNTER VERWENDUNG DES HARZES
RESINE DE LIAISON POUR TONER ET POUR TONER ELECTROPHOTOGRAPHIQUE POUR UN DEVELOPPEMENT ELECTROSTATIQUE FAISANT APPEL A LADITE RESINE

(30) Priority: 28.12.2001 JP 2001400036; 28.12.2001 JP 2001399842
(43) Date of publication of application: 22.09.2004
(73) Proprietor: Mitsui Chemicals, Inc., Tokyo (JP)
(72) Inventor: MATSUOKA, Hiroshi, c/o Mitsui Chemicals, Inc., Sodegaura-shi, Chiba 299-0265 (JP); HASHIMOTO, Hironobu, c/o Mitsui Chemicals, Inc., Tokyo 100-6070 (JP); TAKEI, Hiroyuki, c/o Mitsui Chemicals, Inc., Sodegaura-shi, Chiba 299-0265 (JP); UOSAKI, Hirotaka, c/o Mitsui Chemicals, Inc., Sodegaura-shi, Chiba 299-0265 (JP); TERAUCHI, Tomoya, c/o Mitsui Chemicals, Inc., Sodegaura-shi, Chiba 299-0265 (JP)
(74) Representative: HOFFMANN EITLE
(86) International application number: PCT/JP2002/013749
(87) International publication number: WO 2003/057763

(56) References cited:
- EP-A1- 0 256 136
- EP-A1- 0 323 513
- GB-A- 1 313 000
- JP-A- 1 035 456
- JP-A- 4 361 272
- JP-A- 6 027 726
- JP-A- 7 043 943
- JP-A- 2000 029 247
- JP-A- 2001 272 817
- JP-A- 2003 021 932
- US-A- 3 404 107
- US-A- 5 326 821
- US-A- 5 596 043
- DATABASE REGISTRY American Chemical Society; 16 November 1984 (1984-11-16), ANONYMUS: "Entry for RN 54391-84-3"

## Description

The present invention pertains to an electrophotographic toner that can be used for developing electrostatic images for things like electrostatic printing.

The demand for things like copiers and printers that use electrophotographic methods has dramatically increased and the requirements for their properties have also increased relative to the development of office automation. In general, photo-sensitive materials such as selenium, amorphous silicon and organic semiconductors are exposed to light and development is carried out using a developing agent that contains a toner. Currently, there is the requirement that a clear image is formed without fogging and with sufficient image density. Also, currently, toner with excellent low temperature fixing properties is required relative to the strong demands for high durability and being maintenance free from the standpoint of having high speed and stability and being energy efficient, in particular.

A large adhesion surface area with a base to be fixed is generally necessary through decreasing the viscosity of the toner during melting for improving the toner fixing properties. Thus, previously, decreasing the glass transition point (Tg) of the utilized toner binder resin or decreasing the molecular weight was performed. However, the presence of a resin with low glass transition point adversely affects the stability as a powder during use in a toner or during storage because the resin generally has poor anti-blocking properties. Further, when high flowability resins with low molecular weight come into contact with heated rollers and the toner melts at fixing state, the toner that transfers onto the heated roller soils the transfer paper that is fed next. What is called offset phenomenon is a problem. Further, this trend becomes strikingly obvious to the extent the resin molecular weight is low.

Also, the demand for increased efficiency of electrically charged components has also increased relative to high speed copiers and printers. Thus, greater durability is needed for a toner and durable print-resistant stability is therefore required.

The improvement of things like the molecular weight and molecular weight distribution of binder resins for toners have been proposed. Concretely, attempts were made for decreasing the molecular weight of precipitated resins and decreasing the fixing temperature. However, the melting point is lowered by decreasing the molecular weight and offset images to the fixing roller develop due to the cohesive power of the resin also simultaneously decreasing. Things like methods that use resins with wide molecular weight distribution by using mixtures of high molecular weight resins and low molecular weight resins or binding with high molecular weight components of binder resins are performed for preventing these problems.

As binder resins for toners that use the above-mentioned devices, generally, there are mainly those like styrene-acryl resins (for example, JP-B-55-6895, JP-B-63-32180, and U.S. Patent No. 5,084,368), polyester resins (for example, JP-A-61-284771 , JP-A-62-291668, JP-B-7-101318 and U.S. Patent No. 4,833,057) and polyol resins (for example, JP-A-11-189647).

Among these, there is a trend of using polyester type resins from the standpoint of the balance of fixing properties and offset resistance properties. However, polyester resins have high water-absorbing properties due to polarity that originates in the ester group within the resin structure and undesirable electrical charge occurs under high temperature and high humidity, and the environmental stability is inadequate.

Further, toners that use the above-mentioned styrene-acryl resins, polyester resins and polyol resins do not obtain sufficient results for things like high speed copiers and small-scale copiers with sufficient transfer by the quantity of heat from the heated fixing roller being difficult. Thus, with the objective of preventing an offset image, there are things like resins with a high weight-average molecular weight, but the resin viscosity increases when using resins with cross-linking carried out and the fixing property deteriorates.

There are methods that add things like paraffin wax and low molecular weight polyolefins as releasing agents for meeting requirements like these. Technology as in JP-B-49-65232, JP-A-50-28840 and JP-A-50-81342 discloses the utilization of styrene type binder resins. However, even though these methods can prevent the offset phenomenon, they aggravate the blocking-resistant properties (storage properties) and then make it difficult for the toner to exist as a stable powder during its use or its storage, and/or aggravate the image properties. Also, the effects are small even though a prior releasing agent is applied when there is a polyester resin, and the rapid deterioration of the developing agent is also confirmed when there are many utilized weights.

Therefore, a developing agent obtaining a high picture quality copier image with adequate fixing properties and offset properties require imparting sufficient electrophotographic properties to the above-mentioned developing agent.

But, until now, various methods were attempted for designs such that copier images have been brought about with high picture quality and great detail, but a method that could improve all the aforementioned problems, in particular, was not attained.

A toner binder containing a polycondensation resin (A) and other resin (B) that are combined so as to attain a specific dielectric tangent is described in JP2000029247 A.

US 3,404,107 is directed to rigid polyurethane foams that are the reaction products of an organic polyisocyanate, a copolymer of a hydroxyalkyl acrylate monomer and a vinyl aromatic monomer, an unsaturated polyester and a polyether polyol.

A resin composition for powder coatings containing a polyester resin, an acrylic resin, a copolymer of the polyester and acrylic resins and a blocked polyisocyanate compound is disclosed in US 5,326,821.

GB 1,313,000 refers to novel epoxide compounds and a process for the manufacture of synthetic resins based on the epoxide compounds.

### Disclosure of Invention

The objects for the present invention are the obtaining of a binder resin for a toner with low temperature fixing properties and excellent offset-resistant properties which can prevent offset without applying an offset preventing solution and blocking-resistant properties with the effect of improving the storage properties and environmental stability. And another object is obtaining an electrophotographic toner for electrostatic developing that uses the said resin relative to high speed copiers.

The inventors diligently studied the development of a binder resin having excellent properties that can be used when manufacturing a toner with sufficient properties that can even satisfy the same demands as above-mentioned. The effect can be obtained by reacting, for example, polyester resin and epoxy group-containing styrene type resin and polyisocyanate optionally with wax. Accordingly, the present invention can provide a novel binder resin for toner use, which is a polyester resin made from structural unit derived from a polyester, an epoxy group containing structural unit derived from styrene type resin, structural units with urethane bonding and optionally structural units derived from wax. That is excellent and that cannot be realized by the prior art. Therefor-e, in a first aspect, the present invention provides a binder resin for toner containing a polyester resin (E) that comprises at least
a structural unit with a polyester structure (A),
a structural unit derived from styrene type resin (B),
a structural unit derived from epoxy group (C) and
a structural unit with urethane bonding (D),
the polyester resin (E) being obtainable from
a polyester resin (A2) as 55~99 weight part with the number-average molecular weight (Mn) being 1000~50000, the hydroxyl value being 4~100 mgKOH/g, and the acid value being 1~40 mgKOH/g,
an epoxy group containing styrene type resin (B2) as 45~1 weight part with the number-average molecular weight (Mn) being 1000~30000, the epoxy equivalent being 1000~30000 g/equivalent, and a styrene unit content of 35% by weight or more
and a polyisocyanate (D2) of 0.1~2.5 mole equivalents with an isocyanate group for total hydroxyl value 1 mole equivalent of polyester resin (A2).

In a second aspect, the present invention provides a binder resin for toner with the above polyester resin (E) which has glass transition temperature being 40~70°C
and molecular weight distribution (value with the weight-average molecular weight divided by the number-average molecular weight (Mn), that is Mw/Mn) being 6 or more of the soluble part in tetrahydrofuran.

In a third aspect, the present invention provides a binder resin for toner containing
a polyester resin (G) that comprises at least structural units having a polyester structure (A),
a structural unit derived from styrene type resin (B),
a structural unit derived from epoxy group (C),
a structural unit (D) having a urethane bond and
a structural unit derived from wax (F),
the polyester resin (G) being obtainable from
a polyester resin (A2) as 55~99 weight parts with the number-average molecular weight (Mn) being 1000~50000, the hydroxyl value being 4~100 mgKOH/g and the acid value being 1~40 mgKOH/g,
an epoxy group containing styrene type resin (B2) as 45~1 weight parts with the number-average molecular weight (Mn) being 1000~30000 and the epoxy equivalent being 1000~30000 g/equivalent,
a wax (F1) being 1~13 weight parts for the total weight 100 weight parts of polyester resin (A2) and epoxy group containing styrene type resin (B2)
and a polyisocyanate (D2) which has 0.1~2.5 mole equivalents of isocyanate group for the total hydroxyl value 1 mole equivalent of a polyester resin (A2).

In a forth aspect, the present invention provides an electrophotographic toner for electrostatic developing that uses the above-mentioned binder resin for toner.

### Best Mode for Carrying out the Invention

The present invention is now explained in detail.

The meaning of copolymerization is included in the stated term "polymerization" in the present invention and the meaning of copolymer is included in the stated term "polymer".

A polyester resin (E) of the present invention is, desirably, made from a structural unit (A) having a polyester structure as 55~99 weight parts and
a structural unit derived from styrene type resin (B) as 45~1 weight parts and,
for a total of 100 weight parts of a structural unit having a polyester structure (A) and a structural unit derived from styrene type resin (B),
an structural unit derived from epoxy group (C) as 0.04~15 weight parts and
a polyisocyanate derived structural unit (D) as 0.05~40 weight parts.

A structural unit having a polyester structure (A) in the present invention is components that are derived from a generally corresponding polyester resin (A2). Polyester resin (A2) is a resin that is generally obtained by carrying out a condensation polymerization reaction with at least one kind of diol and at least one kind of dicarboxylic acid as the main components. Further, with things like the control of the molecular weight distribution and glass transition temperature as the objective, a plurality of types of polyester resins can be utilized in combination. The temperature when the above-mentioned condensation polymerization reaction is carried out is, generally, 150°C~300°C, desirably 180°C~270°C and more desirably 180°C~250°C. The reaction time is prolonged when the reaction temperature is less than 150°C and decomposition occurs when the temperature exceeds 300°C.

As diols that are utilized as raw materials of polyester resin (A2), ethylene glycol, 1,2-propane diol(propylene glycol), 1,3-propane diol, 1,3-butane diol, 1,4-butane diol, 2,3-butane diol, diethylene glycol, triethylene glycol, dipropylene glycol, 1,5-pentane diol, 1,6-hexane diol, neopentyl glycol, 2-ethyl-1,3-hexane diol, hydrogenated bisphenol A, ethylene oxide adduct of bisphenol A, and propylene oxide adduct of bisphenol A can be included.

Among these, ethylene oxide adduct of bisphenol A, propylene oxide adduct of bisphenol A, diethylene glycol, triethylene glycol, ethylene glycol and neopentyl glycol are preferred, and propylene oxide adduct of bisphenol A, triethylene glycol, ethylene glycol and neopentyl glycol are more desirably used.

As dicarboxylic acids that can be used as other raw materials of polyester resin (A2), aliphatic saturated dicarboxylic acids like malonic acid, succinic acid, glutaric acid, adipic acid, azelaic acid and sebacic acid; aliphatic unsaturated dicarboxylic acids like maleic acid, fumaric acid, citraconic acid and itaconic acid; aromatic dicarboxylic acids like phthalic acid, terephthalic acid and isophthalic acid; anhydrides of the aforementioned respective dicarboxylic acids (for example, anhydrous succinic acid, anhydrous maleic acid and anhydrous phthalic acid) and low grade alkyl esters of carbon numbers 1~6 of the aforementioned respective dicarboxylic acids (for example, dimethyl succinate, diethyl maleate and dihexyl phthalate) can be included.

Among these, adipic acid, terephthalic acid and isophthalic acid are preferred, and terephthalic acid and isophthalic acid can be more desirably used.

Further, as raw materials of polyester resin (A2), tri-functional or more polyhydric alcohols like glycerin, 2-methyl propane triol, trimethylolpropane, trimethylolethane, sorbitol and sorbitan; aliphatic monocarboxylic acids like octanoic acid, decanoic acid, dodecanoic acid, myristic acid, palmitic acid and stearic acid; branched and unsaturated aliphatic monocarboxylic acids; aliphatic monoalcohols like octanol, decanol, dodecanol, myristyl alcohol, palmityl alcohol and stearyl alcohol; aromatic monocarboxylic acids like benzoic acid and naphthalene carboxylic acid; and tri-functional or more polycarboxylic acids like trimellitic acid and pyromellitic acid as well as their anhydrides can be used as needed. Things like controlling the polyester resin (A2) molecular weight and Tg and imparting a branched structure can be carried out by using these compounds. Among these, glycerin, trimethylolpropane, stearic acid, trimellitic acid and benzoic acid are preferred, and the use of trimethylolpropane, stearic acid and benzoic acid is more preferred.

In particular, , the use of one or more types of the above-mentioned tri-functional or more polyhydric alcohols as a raw material of polyester type resin (A2) is preferred to obtain sufficiently high molecular weight polymer by a method of polymerizing the polyester resin to higher molecular weight polymer by using polyisocyanate (afterward, called urethane elongation) in a post-process. The quantity of the tri-functional or more polyhydric alcohol is preferred to be in a range of 0.25~25 mole% of the total alcohol components (total quantity of diol and tri-functional or more polyhydric alcohol) that is the raw material of the polyester resin (A2), and a range of 0.5~20 mole% is even more preferred. When the quantity of the tri-functional or more polyhydric alcohol is less than 0.25 mole%, the offset-resistant properties and durability are inadequate due to the general reaction properties being low and obtaining a high molecular weight polymer of polyester resin (A2) becomes difficult by urethane-elongation using the latter-mentioned polyisocyanate. And executing condensation polymerization reactions becomes difficult due to becoming easily gelled when manufacturing a polyester resin (A2) when the used quantity of the tri-functional or more polyhydric alcohol exceeds 25 mole%.

The hydroxyl value of polyester resin (A2) is equal or greater than 4 mgKOH/g and being equal or less than 100 mgKOH/g is preferred, while 80 mgKOH/g is more so. Also, the required number of mg of potassium hydroxide is stated for the hydroxyl value in the present invention as the required anhydride for the esterification of hydroxy groups in 1 g of resin being neutralized.

The offset-resistant properties are inadequate due to the polymerization being difficult with the general urethane elongation reaction properties by the latter-mentioned polyisocyanate being low when the hydroxyl value is 4 mgKOH/g or less. When the hydroxyl value exceeds 100 mgKOH/g, the gelled parts are often excessive by urethane elongation using polyisocyanate, and the fixing properties are inadequate. Further, the number-average molecular weight (Mn) of polyester resin (A) is preferred to be 1000~50000 with 1000~20000 being even more preferable. The number-average molecular weight being less than 1000 is not preferred for the aspects of offset-resistant properties and durability, and the case of 50000 being exceeded is not also preferred for the aspect of fixing properties. Further, the glass transition (Tg) of polyester resin (A2) is preferred to be 30°C~80°C and more desirably, is 40~70°C. When less than 30°C, the Tg of urethane-modified polyester resin becomes low after urethane elongation by polyisocyanate, and the blocking-resistant properties (storage properties) deteriorate. When 80°C is exceeded, the Tg of urethane-modification polyester resin becomes exceedingly high after urethane elongation by polyisocyanate, and the fixing properties deteriorate. Further, the acid value of the polyester type resin (A2) is preferred to be 1~40 mg KOH/g. 30 mgKOH/g or less is more preferred and 20 mgKOH/g or less is even more preferred. The required potassium hydroxide number of mg is stated for neutralization of 1 g of resin for the acid value in the present invention. The reaction properties with the latter-mentioned epoxy group containing styrene type resin (B2) become exceedingly low when the acid value is less than 1 mgKOH/g, and the deterioration of the blocking-resistant properties (storage properties) is not preferred when greater than 40 mgKOH/g.

Two or more types of polyester resins can be used in combination as a polyester resin (A2) of the present invention. In such cases, the polyester resin (A2) preferably has an acid value and a hydroxyl value which are within the ranges mentioned above as a total, even though the respective resins have acid values or hydroxy values of outside the ranges mentioned above.
A preferable embodiment is a polyester resin (A5) which comprises 50 to 85 weight% of polyester resin (A3), which has a hydroxyl value of 0~15 mgKOH/g, preferably 0~13 mgKOH/g, and an acid value of 0~6 mgKOH/g, preferably 0~5 mgKOH/g, and 50 to 15 weight% of polyester resin (A4), which has a hydroxyl value of 30~100 mgKOH/g, preferably 30~90 mgKOH/g, and an acid value of 7~25 mgKOH/g, preferably 9~20mgKOH/g. More preferably, polyester resin (A5) comprises 60 to 85 weight% of polyester resin (A3) and 40 to 15 weight% of polyester resin (A4).
Polyester resin (A5) preferably has at least one maximum or one shoulder within the molecular weight range of 1000~20000, more preferably within the range of 1000~15000, in a chromatography measured by GPC.

In the present invention, the structural unit derived from styrene type resin (B) and structural unit derived from epoxy group (C) are components that are derived from conventional epoxy group containing styrene type resins (B2). And the epoxy group containing styrene type resin (B2) is a resin that is obtained by copolymerization of conventional styrene and at least 1 type or more of epoxy group containing vinyl compound and other polymerizable compounds that can be used as needed. The epoxy equivalent being 1,000 g/equivalent or more for an epoxy group containing styrene type resin (B2) of the present invention is preferred, more so as 1,500 or more, and 30,000 g/equivalent or less, and being 15,000 g/equivalent or less is more preferred. The reactivity with the latter-mentioned polyester resin is exceedingly high when the above-mentioned epoxy equivalent is less than 1,000 g/equivalent and problems are generated for things like the fixing property of epoxy group containing styrene type resin (B2). On the other hand, when the above-mentioned epoxy equivalent exceeds 30,000 g/equivalent, the reactivity with the latter-mentioned polyester resin is insufficient and the viscosity is inadequate when used as a toner.

A number-average molecular weight (Mn) of 1,000 or more, preferably 3,000 or more and 30,000 or less, still preferably 25,000 or less, is preferred for an epoxy group containing styrene type resin (B2) of the present Invention. When the above-mentioned number-average molecular weight (Mn) is less than 1,000, the viscosity is insufficient when used as toner, and the offset-resistant properties are decreased. On the other hand, when 30,000 is exceeded, the compatibility with polyester type resins deteriorates and the viscosity is insufficient when used as a toner. Also, the epoxy equivalent means the weight of epoxy group containing resin that contains 1 gram equivalent of epoxy group (epoxy oxygen) for the present invention.

The styrene unit of 35 weight% or more, preferably 50 weight% or more, and of 99.5 weight% or less, preferably 90 weight% or less, is used for epoxy group containing styrene type resin (B2) of the present invention. When the styrene unit Is less than 35 weight%, the water-absorbing properties of the resin increase when used as a toner and the aforementioned environmental stability becomes inadequate.

Two or more types of resins that differ In epoxy equivalents, number-average molecular weight or composition can be used as an epoxy group containing styrene type resin (B2) of the present invention. This can be used as a preferred epoxy group containing styrene type resin (B2) even though the epoxy equivalents, number-average molecular weight and composition are ones outside the aforementioned preferred range, if this is within the above-mentioned range as a total.

An epoxy group containing styrene type resin (B2) of the present invention can be constructed by methods of common knowledge like solution polymerization, bulk polymerization, suspension polymerization and emulsion polymerization. Among these, solution polymerization methods that use organic solvents are most preferably used because of the simplicity. The solvent type is not especially limited for the above-mentioned solution polymerization, but the use of aromatic hydrocarbons like benzene, toluene, ethylbenzene, ortho-xylene, meta-xylene, para-xylene and cumene are preferred from the aspects of things like solubility and economics of raw materials and obtained resins. These solvents can be used independently or in combination; other solvents can also be used.

The use of a polymerization initiator is preferred for the above-mentioned polymerization reactions. The polymerization initiators are not especially limited, but, ordinarily, radical polymerization initiators are used. Concretely, the initiators can be represented by azo series initiators like 2,2'-azobisisobutylnitrile, 2,2'-azobis-(4-methoxy-2,4-dimethylvalonitrile), 2,2'-azobis(2-methylbutylnitrile), dimethyl-2,2'-azobisisobutylate; ketone peroxide types like methyl ethyl ketone peroxide and acetyl acetone peroxide; peroxyketal types like 1,1'-bis(t-butylperoxide)-3,3,5-trimethylcyclohexane and 1,1-bis(butylperoxy)cyclohexane; hydroperoxide types like t-butylhydroperoxide and cumene hydroperoxide; dialkylperoxide types like di-t-butylperoxide, t-butylcumyl peroxide and dicumyl peroxide; diacyl peroxide types like isobutyl peroxide, octanyl peroxide and decanoyl peroxide; peroxy dicarbonate types like diisopropylperoxy dicarbonate, di-2-ethylhexylperoxy dicarbonate and di-n-propylperoxy dicarbonate; sulfonyl peroxide types like acetylcyclohexylsulfonyl peroxide; and peroxy esters like t-butylperoxy acetate, t-butylperoxy isobutylate and t-butylperoxyneodecanoate. These can be used independently, or two or more types can be jointly used. The various types and quantities can be used by suitable selection according to things like the reaction temperature and the monomer concentration; ordinarily, initiators are used at 0.01~10 weight parts per 100 weight parts of the stock monomer. Further, polymerization can be carried out by the suitable selection of things like the reaction temperature even without using a polymerization initiator.

Concretely, ones like glycidyl acrylate, β-methylglycidyl acrylate, 3,4-epoxycyclohexylmethyl acrylate, glycidyl methacrylate, β-methylglycidyl methacrylate and 3,4-epoxycyclohexylmethyl methacrylate can be given as epoxy group containing vinyl monomers that can be used for the manufacture of an epoxy group containing styrene series polymer (B2) of the present invention.

Other polymerizable compounds that can be used for the manufacture of an epoxy group containing styrene series polymer (B2) of the present invention are compounds other than styrene (styrene monomer) that have polymerizable double bonds; for example, there are acrylate types like methyl acrylate, ethyl acrylate, propyl acrylate, butyl acrylate, octyl acrylate, cyclohexyl acrylate, lauryl acrylate, stearyl acrylate, benzyl acrylate, furfuryl acrylate, tetrahydrofurfuryl acrylate, ethoxyl acrylate, butoxyl acrylate, dimethylaminomethyl acrylate dimethylaminoethyl acrylate; methacrylate types like methyl methacrylate, ethyl methacrylate, propyl methacrylate, butyl methacrylate, octyl methacrylate, lauryl methacrylate, stearyl methacrylate, cyclohexyl methacrylate, benzyl methacrylate, furfuryl methacrylate, tetrahydrofurfuryl methacrylate, hydroxyethyl methacrylate, hydroxypropyl methacrylate, hydroxybutyl methacrylate, dimethylaminomethyl methacrylate and dimethylaminoethyl methacrylate; aromatic vinyl compounds like vinyl toluene, -methylstyrene, chlorostyrene; unsaturated dibasic acid dialkyl ester types like dibutyl maleate, dioctyl maleate, dibutyl fumarate and dioctyl fumarate; vinyl ester types like vinyl acetate and vinyl propionate; nitrogen containing polymerizable compounds like acrylonitrile, methacrylnitrile, acrylamide, methacrylamide, N-substituted acrylamide and N-substituted methacrylamide; bifunctional polymerizable compounds like divinylbenzene, (poly)ethylene glycol diacrylate and (poly)ethylene glycol dimethacrylate; and conjugated diene compounds like butadiene, chloroprene and isoprene. At least one or two or more types of these vinyl monomers can be used. Among these, ones like aromatic vinyl monomer types, acrylate types, methacrylate types, dialkyl fumarate types, acrylonitrile, acrylamide and methacrylamide are especially preferred as polymerizable compounds.

The glass transiton temperature (Tg) of the epoxy group containing styrene type resin (B2) is preferred to be 30°C~80°C. More preferably, the Tg is 40°C or more and 70°C or less. The latter-mentioned binder resin for toner Tg becomes low when the Tg is below 30°C and the blocking-resistant properties (storage properties) deteriorate; the fixing properties deteriorate when the Tg of the resin becomes excessively high after urethane elongation when the Tg is above 80°C.

A structural unit (D) having a urethane bond of the present invention can ordinarily be formed by reacting polyisocyanate (D2) via an urethane elongation reaction with things like the aforementioned hydroxy group of polyester resin and hydroxyl group derived from epoxy group of epoxy group containing styrene type resin. A polyisocyanate (D2) of the present invention is a compound having two or more isocyanate groups within one molecule and can include diisocyanate compounds that contain two isocyanate groups within one molecule that can be represented by, for example, ones like resin group diisocyanates like hexamethylene diisocyanate (HDI), tetramethylene diisocyanate; resin family diisocyanates like isophorone diisocyanate (IPDI), norbonane diisocyanate (NBDI) and hydrogenated diphenylmethane diisocyanate; aromatic family diisocyanates like tolylene diisocyanate (TDI) and diphenylmethane diisocyanate (MDI); and aralkyl series diisocyanates like xylene diisocyanate (XDI). Polyisocyanates that contain 3 or more isocyanate groups in 1 molecule like polyphenylene-polymethylene polyisocyanate (polymeric MDI) can also be used. Further, modified polyisocyanate series with various modifications like biuret modification, allophanate modification, isocyanurate modification and urethane modification of the aforementioned respective polyisocyanate series can also be used. Among these, the aromatic diisocyanate is one of the polyisocyanates that is most suitably used since it has high reactivity and is inexpensive.

A polyester resin (E) of the present invention can be desirably obtained by reacting a polyester resin (A2), an epoxy group containing styrene type resin (B2) and a polyisocyanate (D2).

The aforementioned reaction methods are not especially limited. For example, reaction of polyester resin (A2), an epoxy group containing styrene type resin (B2) and polyisocyanate (D2) in an apparatus such as a reactor or an extruder is preferred. And reaction with epoxy group containing styrene type resin (B2) after reacting polyester resin (A2) and polyisocyanate (D2) is also preferred. Further, after reacting polyester resin (A2) with epoxy group containing styrene type resin (B2), reaction with polyisocyanate (D2), also, and a condensation polymerization reaction that manufactures a polyester resin (B2) can also be carried out in the presence of polyisocyanate and/or epoxy group containing styrene type resin (B2). Among these methods two most typical examples are discussed below.

Preferably suitable examples of methods that can be used to react polyester resin (A2) and epoxy group containing styrene type resin (B2) and polyisocyanate (D2) can include methods of molten kneading by feeding both resins of polyester resin (A2) and epoxy group containing styrene type resin (B2) to a twin screw extruder, and further introducing polyisocyanate (D2) into a resin mixture during kneading conveyance, for example. An apparatus like a single screw extruder, static mixer and conventional stirrer-attached reactor can also be used as the reactor in the above-mentioned method.

A preferred range of the above-mentioned reaction temperature is 100~200°C, more preferably being 140°C or higher and 190°C or lower. The offset-resistant properties deteriorate by the urethane elongation reaction becoming insufficient when lower than 100°C and the resin decomposes from the heat when higher than 200°C.

The use of a range of 45~1 weight part of epoxy group containing styrene type resin (B2) for 55~99 weight parts of polyester resin (A2) in the above-mentioned method is preferred. The polyester resin (A2) is more preferred at 60 weight parts or more and 97 weight parts or less. The epoxy group containing styrene type resin (B2) is more preferred at 40 weight parts or less and at 3 weight parts or more.

The environmental stability is insufficient when the proportion of the epoxy group containing styrene type resin (B2) is less than 1 weight% and the fixing properties lessen when higher than 45 weight%.

A polyester resin (A2) having a total hydroxy group of 1 molar equivalent, and reacted with 0.1~2.5 molar equivalents of polyisocyanate (D2) as the isocyanate group for the polyisocyanate (D2) is preferred, more so preferred being more than 0.2 molar equivalents or more or being 2.0 molar equivalents or less. More concretely, the polyisocyanate (D2) can be present in a range that is preferred to be at 0.05~40 weight parts for a total 100 weight parts of polyester resin (A2) and epoxy group containing styrene type resin (B2). The isocyanate groups of polyisocyanate (D2) is not preferred from the aspect of offset-resistant properties when there is less than 0.1 molar equivalent per hydroxy group 1 mole equivalent of polyester resin (A2), and unreacted polyisocyanate remains within the obtained urethane modified polyester resin when 2.5 mole equivalents are exceeded.

On the other hand, reaction with epoxy group containing styrene type resin (B2) after reacting polyester resin (A2) and polyisocyanate (D2) is also preferred.

In this case, a polyester resin (A2) having a total hydroxy group of 1 molar equivalent, and reacted with 0.1~2.5 molar equivalents of polyisocyanate (D2) as the isocyanate group for the polyisocyanate (D2) is preferred, more so preferred being more than 0.2 molar equivalents or more or being 2.0 molar equivalents or less. The isocyanate groups of polyisocyanate (D2) is not preferred from the aspect of offset-resistant properties when there is less than 0.1 molar equivalent per hydroxy group 1 mole equivalent of polyester resin (A2), and unreacted polyisocyanate remains within the obtained urethane modified polyester resin when 2.5 mole equivalents are exceeded.

The use of a range of 45~1 weight part of epoxy group containing styrene type resin (B2) for 55~99 weight parts of the urethane modified polyester resin in the above-mentioned method is preferred. The urethane modified polyester resin is more preferred at 60 weight parts or more and 97 weight parts or less. The epoxy group containing styrene type resin (B2) is more preferred at 40 weight parts or less and at 3 weight parts or more.

The environmental stability is insufficient when the proportion of the epoxy group containing styrene type resin (B2) is less than 1 weight% and the fixing properties lessen when higher than 45 weight%.

Further, the above-mentioned reaction can also be performed in the presence of materials like the latter-mentioned charge controlling agents (CCA), coloring agents and releasing agents.

A polyester resin (E) of the present invention normally has a tetrahydrofuran soluble part and a tetrahydrofuran insoluble part. Further, the proportion of the tetrahydrofuran insoluble part is 50 weight% or less, preferably 35 weight% or less and more preferably so, 20 weight% or less. The fixing properties of the toner deteriorate when the tetrahydrofuran insoluble part is greater than 50 weight%. The tetrahydrofuran insoluble part contains more nitrogen which originates in the urethane bond in the tetrahydrofuran insoluble part.

Further, the molecular weight distribution of the tetrahydrofuran soluble part of a polyester resin (E) (Mw/Mn) being 6 or more is preferred from the aspect of the offset-resistant properties, more desirably 7 or more.

As a binder resin for toner of the present invention, a binder resin for toner can be used that contains a polyester resin (G) comprises at least a structural unit having a polyester structure (A),
a structural unit derived from styrene type resin (B),
an structural unit derived from epoxy group (C),
a structural unit having a urethan bond (D) and
a structural unit derived from wax (F),
the above-mentioned polyester resin (G) being comprised of
55~99 weight parts of structural units having a polyester structure (A),
45~1 weight parts of styrene type resin derived structural units (B) and,
for a total 100 weight parts of structural units having a polyester structure (A) and structural unit derived from styrene type resin (B),
0.04~15 weight parts of structural unit derived from epoxy group (C)
0.05~40 weight parts of polyisocyanate derived structural unit (D) and 1~13 weight parts of structural units derived from wax (F).

A structural unit derived from wax (F) mentioned above is a structural unit derived from the corresponing wax (F2). Any wax with a melting point of 70~155°C is preferred to be used for the above-mentioned wax (F2); concretely, low molecular weight polyolefin types like polyethylene, polypropylene and polybutene, silicon types that soften when heated, resin group amide types and ceramic wax such as amido oleate, amido erucate ricinoleate and amido stearate, and natural wax like rice wax, sugar wax, Japanese lacquer wax, beeswax, carnauba wax, candelllla wax and montan wax, and Fischer-Tropsch wax and modifications of these are given, and at least 1 type among these is used as wax (F2). Blocking is caused, which is considered to originate in an increase of the wax low melting point component of the wax when the melting point of wax (F2) is less than 70°C and the low temperature fixing properties decrease by causing wax melting to be difficult when 155°C or more.

A polyester resin (G) of the present invention, for example, can be obtained using the above-mentioned wax (F2) in an optional process of a method that manufactures the aforementioned polyester resin (E).

Further, the quantity of the above-mentioned wax (F2) is 1~13 weight parts for a total weight 100 weight parts of polyester resin (A2) and epoxy group containing styrene type resin (B2), especially being preferred at 2 weight parts or more and 10 weight parts or less. The effects of the wax do not appear at less than 1 weight part and the soiling of the fixing roller or light sensitive part is extreme, which is considered to originate in increasing the softness component of the wax when exceeding 13 weight parts.

The polyester resin (E) and polyester resin (G) of the present invention are characterized by containing a resin (E1) that is manufactured with at least a structural unit having a polyester structure (A1) and a structural unit derived from styrene type resin (B) and an structural unit derived from epoxy group (C).

The above-mentioned resin (E1), for example, is considered to be produced by reactions like:
1. A carboxyl group of a polyester resin (A2) and an epoxy group containing styrene type resin (B2) epoxy group are reacted.
2. A reaction of the carboxyl group within the polyester resin (A2) and the epoxy group of the epoxy group containing styrene type resin (B2) occurs when manufacturing a polyester resin (E) from the above-mentioned polyester resin (A2) and epoxy group containing styrene type resin (B2) and polyisocyanate (D2). In this case, hydroxy group generated by the above-mentioned reaction of carboxyl group and epoxy group may react further with polyisocyanate (C2).
3. The carboxyl group of the urethane modified polyester resin and an epoxy group of the epoxy group containing styrene type resin (B2) react. Then, the hydroxyl group that is generated by the above-mentioned reaction reacts with an isocyanate group of the polyisocyanate (C2).
4. Wax is also used in the above-mentioned 1,2 and 3 reactions. The above structural unit having a polyester structure (A1) is a structural unit derived from mainly polyester resin having a chain end carboxyl group of polyester resin (A2).
There are also methods wherein styrene type resin with a group like a hydroxy group and a carboxyl group reacts with a polyester as a method that bonds a polyester resin and styrene type resin, and resin (E1) can be manufactured with good efficiency since a reaction for the epoxy group with the carboxyl group occurs quickly and selectively.

A resin (E1) of the present invention is manufactured by bonding of a unit having a polyester resin structure (A1) and a structural unit derived from styrene type resin (B), and can be analyzed using commonly known means like solvent separation, gel permeation chromatography (GPC) and broad band nuclear magnetic resonance spectroscopy (broad band NMR) and infrared spectroscopy (IR).

A resin (E1) that is obtained by the above-mentioned methods of 2, 3, 4 can be used as polyester resin (E) and polyester resin (G) as such due to structural units derived from polyisocyanate (D) and structural units derived from wax (F). A resin (E1) that is obtained by the above-mentioned method of 1 can be a polyester resin (E) and polyester resin (G), for example, by reacting with polyisocyanate, mixing with a urethane modified polyester, and reacting with a polyester resin (A2) and a polyisocyanate(D2) and wax (F) as needed, in the presence of (E1).

Bonding with the above-mentioned resin is considered to be by wax (F2) reacting with a polyester resin (A2) and an epoxy group containing styrene type resin (B2) when a wax (F2) that is used in the present invention has a group that has hydroxyl group and carboxyl group reactivity. The dispersion of the wax components in the polyester resin (G) is improved when the above-mentioned resin and wax (F2) bond, and the blocking-resistant properties are considered to be further improved as a result.

The proportion of the tetrahydrofuran insoluble part of a polyester resin (G) of the present invention is 50 weight% or less, desirably 35 weight% or less and more desirably 20 weight% or less. The fixing properties of the toner deteriorate when the tetrahydrofuran insoluble part is greater than 50 weight%. More nitrogen which originates in the urethane bond is contained in tetrahydrofuran insoluble part than in the tetrahydrofuran soluble part.

The molecular weight distribution (Mw/Mn) of the tetrahydrofuran soluble part of polyester resin (G) being 3 or more is preferred from the aspect of the hot offset-resistant properties, more preferred at 6 or more, and further preferred to be 7 or more. The glass transition temperature (Tg) of polyester resin (E) and polyester resin (G) of the present invention is preferred to be 40~70°C, and 45°C or more and 65°C or less are more preferred. The storage properties deteriorate when the Tg is less than 40°C and the fixing properties deteriorate when 70° is exceeded.

Further, the respective manufacturing units do not need to be completely bonded for the polyester resin (E) and polyester resin (G) of the present invention. For example, although unreacted polyester resin (A2) or unreacted epoxy group containing styrene type resin (B2) remains, the polyester resin as a whole can be used as a binder resin for a toner, as far as has above-mentioned preferable properties as a binder resin for a toner or a toner.

Analysis of the structure and composition of polyester resin (E) and polyester resin (G) of the present invention can be performed using conventional methods. Limits on the analysis means are a problem when the said resin has gel analysis. However, the said resin can be completely decomposed by hydrolysis and the obtained carboxylic acid, alcohol and styrene type resins can be measured through analysis using techniques like liquid chromatography, IR and NMR.

Binder resins for toner of the present invention are the above-mentioned polyester resin (E) and polyester resin (G) respectively independent, but mixtures of polyester resin (E) and polyester resin (G) are also preferred. Also, composites with other components added to those in a range without losing the characteristics are also preferred. Concretely, any conventional ones are preferred as binder resins; for example, ones like polyester resins, polystyrene type resins, styrene-acryl resins, epoxy resins and polyol resins can be included as other components.

Among these, styrenic resin (H) can be used preferably. Styrenic resin (H) can be prepared in a similar manner to the preparation of epoxy group containing styrene type resin (B2). However styrenic resin (H) does not have an epoxy group. Styrenic resin (H) preferably has at least one maximum or one shoulder within the molecular weight range of 2000~25000, more preferably within the range of 3000~20000, in a chromatography measured by GPC. The peak molecular weight or the shoulder molecular weight being less than 2000 can not be preferred for the aspects of durability, and the case of 25000 being exceeded is not also preferred for the aspect of fixing properties. Further, a Mw/Mn value, which indicates the molecular weight distribution of the resin, of greater than 3 is preferred for the aspects of offset-resistant properties

Further, the glass transition temperature (Tg) of styrenic resin (H) is preferred to be in the range of 30°C~80°C. When less than 30°C, the Tg of styrenic resin becomes low after urethane elongation, then the blocking-resistant properties, preservability, can be deteriorated. When higher than 80°C, fixing properties can be detriorated. More desirably, the Tg range is 40~70°C.

Polyester resin (E) and/or polyester resin (G) can be used with styrenic resin (H), and preferable mixing ratio is 75/25 to 99/1 by weight.

In use of styrenic resin (H), a resin obtainable from polyester resin (A6), epoxy group containing styrene type resin (B2) and polyisocyanate (D2) can be preferably used with (H) as a polyester resin (E2). The polyester resin (A6) has a hydroxyl value of 5~100 mgKOH/g, preferably 5~80 mgKOH/g, and an acid value of 10~40 mgKOH/g, preferably 1~30 mgKOH/g, more preferably 1~20 mgKOH/g. Another preferable embodiment of polyester resin (E) used with (H) is a resin obtainable from above-mentioned polyester resin (A5), epoxy group containing styrene type resin (B2) and polyisocyanate (D2) as a polyester resin (E3).. Each of polyester resin (E2) and polyester resin (E3) preferably has at least one maximum or one shoulder within the molecular weight range of 1000~20000, more preferably within the range of 1000~15000, in a chromatography measured by GPC.

A toner of the present invention contains binder resin for toner that contains things like the above-mentioned polyester resin (E) and polyester resin (G), charge control agent (CCA), coloring agent and surface treating agent and wax.

The quantity of binder resin for toner of the present invention is preferred to be 40~95 weight% in toner.

Below, ones other than binder resin for toner are discussed.

Previously known dyes and cosmetics can be use as colorants that are used in toner of the present invention and, concretely, can be represented by carbon black, magnetite, phthalocyanine blue, Peacock Blue, Permanent Red, Lake Red, Rhodamine Lake, Hansa Yellow, Permanent Yellow, benzidine yellow, Nigrosine dye (C.I. No. 50415) aniline blue (C.I. No. 50405), charcoal blue (C.I. No. *azoec Blue* 3), chromium yellow (C.I. No. 14090), Ultramarine Blue (C.I. No. 77103), Dupont Red (C.I. No. 26105), Oriental Red #330 (C.I. No. 60505), quinoline yellow (C.I. No. 47005), methylene blue chloride (C.I. No. 52015), phthalocyan blue (C.I. No. 74160), malachite green oxalate (C.I. No. 42000), lamp black (C.I. No. 77266), Rose Bengal (C.I. No. 45435), oil black and azoyl black. The used quantity is 3~35 weight parts for 100 weight parts of binder resin for toner, desirably 3~20 weight parts, and the use in a range of 12 weight parts or less is preferred when considering the suitably desirable OHP film permeability of the toner image and 3~9 weight parts is especially desirably suitable.

Further, charge control agents can be used by suitable selection of conventional charge control agents that initiate ones like Nigrosine, quaternary ammonium salts and metallic azo dyes and the used quantity is 0.1~10 weight parts used commonly used for 100 weight parts of binder resin composite for toner.

Wax that can be used for toner of the present invention can include ones represented by the aforementioned wax (F). Wax can be contained in polyester resin (G) and wax can be used within a range without loss of characteristics, as needed.

A surface treating agent that can be used for toner of the present invention improves the powder flowability by the presence of the surface treating agent being mutually between toner and carrier or toners by being added to toner. Further, the life of the developing agent is increased. Concrete representatives can include fine powders such as colloidal silica, alumina, titanium oxide, polytetrafluoroethylene, poly(vinylidene chloride), polymethyl methacrylate, polystyrene ultrafine particles and silicone; ones like AEROSIL 130, 200, 200V, 200CF, 200FAD, 300, 300CF, 380, R972, R972V, R972CF, R974, R976, RX200, R200, R202, R805, R812, R812S, TT600, MOX80, MOX170, COK84, Titanium Oxide T805 and Titanium Oxide P25 (above, Japan Aerojiru Co. and Teguza Co. products), CAB-O-SIL L90, LM130, LM150, M5, PTG, MS55, H5, HS5, LM150D, M7D, MS75D, TS720, TS610 and TS530 (above, CABOT Co. products) can be included as trade names. Further, the specific surface area according to nitrogen absorption by BET method is 30 m²/g or more for the surface area of the said surface treating agents, and ones within a range 50~400 m²/g are especially preferred. The used quantity of the said surface treating agents is suitably preferred to be 0.1~20 weight parts for 100 weight parts of binder resin composite for toner.

Further, a toner of the present invention can contain other binder resins for toner within a range without loss of the characteristics. Any conventional ones can be used as the above-mentioned binder resin as other contained binder resins for toner.

The following desirably suitable examples can be included as toner manufacturing methods of the present invention that include these materials. Kneading machines like heated rollers, kneaders and extruders are used for satisfactorily mixing binder resin for toner of the present invention, colorants and other additives when need by a powder mixer, and the respective manufacturing components are satisfactorily mixed by melting and kneading at temperatures of 100~200°C. After these cool, grinding and classification are carried out, particles in a common range of 8~20 *µ*m are collected and an electrophotographic toner is obtained by surface treating agent being made into a powder by a powder mixing method.

The environmental stability is good when the water-absorbing properties are low for binder resin for toner and toner of the present invention. The dispersion properties are preferred within a polyester resin (E) of a styrene type resin with low water-absorbing properties due to the above-mentioned resin (E1) being contained among polyester resins (E) for this, and the effect is determined to be due to the total water-absorbing properties decreasing.

A toner that is obtained by the present invention can be used for various developing processes. For example, the toner can be used for cascade developing methods, magnetic brush methods, powder cloud methods, touchdown developing methods, the so-called micro-toning method that uses a magnetic toner that is manufactured by a grinding method as a carrier and the so-called bipolar magnetic toner method that obtains a necessary toner charge by the frictional charge of magnetic toner ground, but, is not limited to these.

Further, a toner obtained by the present invention can be used in various fixing methods like, for example, the so-called oil-less and oil coated heated roller methods, flash methods, oven methods and pressure fixing methods.

Further, toner of the present invention can be used in various cleaning methods, like, for example the so-called fur brush method and plate method.

### Examples

The present invention is concretely explained by examples and comparative examples in the following. The meaning of "part" in the description of the examples and comparatives examples is limited without special notice and means "weight part". Also, the measurement methods and determination methods of the data in the respective tables are as follows.

The glass transition temperature (Tg) is determined by differential scanning calorimetry (DSC) and was measured by a DSC-20 (Seiko Electronic Industries product). As a sample, 10 mg was heated from -20°C to 200°C at 10°C/minute and the Tg was determined by the point of intersection of the baseline of the obtained curve and the endothermic peak slope. Prior to this heating and measurement, resin was heated to 200°C and, after being held for 5 minutes, a process that lowered the temperature to normal temperature (25°C) was immediately carried out and the uniformity of the thermal history of the resins was preferred. Further, the melting point of the wax was also determined from the endothermic peak of the wax.

Hydroxyl value measurement can be performed through suitable determination by acid anhydrides, for example, with methods using anhydrous phthalic acid for the acid anhydride and imidazoyl for a catalyst are especially preferred, and pyridene for solvent with the acid anhydrides and catalyst dissolved is used as the reaction reagent.

Afterward, the reaction reagents and resin are reacted, and the necessity of use of solvents with excellent resin solubility, like pyridene and tetrahydrofuran (THF), goes without saying.

Acid value measurement methods are carried out by neutralization titration and the use of solvent with excellent resin solubility goes without saying, and mixed solvents of xylene/dimethylformamide=1/1 (weight ratio) are especially preferred.

A resin sample of 0.25 g is weighed out for the epoxy equivalents and, after charging in a 200 ml erlenmeyer flask, dissolved by adding 25 ml of dioxane. 25 ml of 1/5 normal hydrochloric acid (dioxane solvent) is added and, after stoppering and adequately mixing, left undisturbed for 30 minutes. Then, after adding 50 ml of toluene-ethanol mixed solution (1:1 volume ratio), was titrated with 1/10 normal sodium hydroxide aqueous solution with Cresol Red as the indicator. The epoxy equivalent (g/equivalent) was calculated by the following equation based on the titration results. Epoxy equivalent (g/equivalent)=1000 x W/[(B-S) x N x F] W: sample recovery quantity (g), B: quantity of sodium hydroxide required for blank test (ml), S: quantity of sodium hydroxide required for sample test (ml), N: normality of sodium hydroxide and F: titer of sodium hydroxide aqueous solution.

The average molecular weight is determined using gel permeation chromatography (GPC) for the molecular weight. The measurement was carried out under the following conditions with commercial mono-dispersed standard polystyrene as the standard.

| | |
|---|---|
| Detector : | SHODEX RI-41S |
| Solvent : | Tetrahydrofuran |
| Column : | KF-G+KF-807L X 3+KF800D |
| Flow Rate : | 1.0 ml/minute |
| Sample : | 0.25% THF Solvent |

Further, the NBS706 polystyrene sample (Mw=288,000, Mn=137,000, Mw/Mn=2.11) Mw/Mn which was carried out by the above-mentioned measurement conditions was confirmed as 2.11±0.10 for measurement confidence.

The volume average particle size is the volume average particle size that is determined by a Coulter counter, and the toner grindability determination was carried out for the following standards by measuring the volume average particle size of a sample that was jet ground under fixed conditions.
- ○ :: 11 µm ≧ volume average particle size ≧ 7 µm
- Δ :: 7 µm > volume average particle size ≧ 5 µm
13 µm ≧ volume average particle size > 11 µm
- × :: 5 µm > volume average particle size
volume average particle size > 13 µm

The fixing properties, after an unfixed image was formed by a copier that is reconstructed with a commercial electronic photographic copier, this unfixed image was fixed using a heated roller fixing device that reconstructs the fixing part of a commercial copier. The fixing rate of the heated roller was 210 mm/sec and fixing of the toner was carried out by varying the temperature of the heated roller at each 5°C. The obtained fixed image is rubbed and was rubbed 10 times after being given a 0.5 Kg load with sand rubber (manufactured by Tombow pencil Co. LTD.) and the image density before and after this friction test is measured by a MacBeth refractive densimeter. The lowest fixing temperature was the lowest fixing temperature where the change the image density percentage change is 70% or more at each temperature. Further, the utilized heated roller fixing device did not have a silicone oil supply structure in this study. Also, the environmental conditions were normal temperature and normal pressure (temperature 22°C, relative humidity 55%).
- ○ :: lowest fixing temperature ≦ 170°C
- Δ :: 190°C ≧ lowest fixing temperature > 170°C
- × :: lowest fixing temperature > 190°C

The evaluation of the offset-resistant properties were determined by the measurement of the above-mentioned lowest fixing temperature and a fixing process was carried out by the above-mentioned heated roller fixing device by transferring the toner image after forming an unfixed image by the above-mentioned copier; then, operation with observation of whether or not toner soiling is produced on a transfer paper after a blank sheet of transfer paper is sent to the heated roller fixing device at the same conditions was repeated at conditions with a gradual increase of the fixing temperature of the heated roller of the aforementioned heated roller fixing device, and there was a lowest setting temperature where soiling was produced by toner as the offset generating temperature. Further, the environmental conditions were normal temperature and normal pressure (temperature 22°C, relative humidity 55%).
- ○ :: offset generating temperature ≧ 240°C
- Δ :: 240°C > offset generating temperature ≧ 220°C
- × :: 220°C > offset generating temperature

Evaluation of the environmental stability is carried out from the ratio of frictional charge quantity Q1 , which is measured by a Toshiba Chemical Co. product blow-off charge measurement device after mixing and stirring 1 g of toner that was left alone for 48 hours at 22°C and 55% relative humidity and 49 g of Powder-Tekku Co. product carrier iron filings (F95-100) for 30 minutes with a table shaker mixer, and frictional charge quantity Q2, which is measured by Toshiba Chemical Co. product blow-off charge measuring device after mixing and stirring 1 g of toner that was left alone for 48 hours at 35°C and 85% relative humidity and 49 g of Powder Tekku Co. product carrier iron filings (F95-100) for 30 minutes with a table shaker mixer.
- ○ :: Q2/Q1 ≧ 0.9
- Δ :: 0.9 > Q2/Q1 ≧ 0.7
- × :: 0.7 > Q2/Q1

The storage properties, after being left alone for 24 hours under the conditions of temperature 40°C and relative humidity 60%, putting 5 g in a 150 mesh sieve, the scale of the rheostat of a powder tester (Hosokawa Powder Engineering Laboratories) as 3, adding 1 minute of vibration. The weight that remained on the 150 mesh sieve after vibration was measured and the residual weight ratio was determined.
- ○ :: Less Than 20%
- Δ :: 20% or More and 35% or Less
- × :: Greater Than 35%

The following resins were used as polyester resin (A2) in the present invention.

Resin A-1: A reflux condenser, a water separate unit, nitrogen gas inlet tube, thermometer and stirrer were attached to a 4-hole 5 L flask, and 24.0 mol of Polyol KB300 (Mitsui Chemical, K.K. product), 56.0 mol of ethylene glycol (EG), 4.0 mol of triethylene glycol (TEG), 83.5 mol of terephthalic acid (TPA) and 18.3 mol of benzoic acid (Benz A) were put inside, and resin A was obtained by dehydration condensation polymerization at 180~240°C while charging nitrogen within the flask. The reaction product Tg was 45°C, the hydroxyl value was 22.0 mg KOH/g, an acid value of 2.1 mg KOH/mg and the number-average molecular weight was 2800.

Resin A-2: Resin A-2 was obtained by a method identical with Resin A-1 other than having 28.5 mol of Polyol KB300 (Mitsui Chemical K.K. product), 66.5 mol of ethylene glycol (EG), 5.0 mol of trimethylolpropane (TMP, 99 mol of terephthalic acid (TPA) and 20.0 mol of benzoic acid (Benz A). The reaction product Tg was 56°C, the hydroxyl value was 3.0 mg KOH/g or less, an acid value of 20.9 mg KOH/mg and the number-average molecular weight was 2900.

Resin A-3: Resin A-3 was obtained by a method identical with Resin A-1 other than having 22.0 mol of Polyol I KB300 (Mitsui Chemical K.K. product), 8.0 mol trimethylolpropane (TMP), 50.0 mol of ethylene glycol (EG), 20.0 mol of triethylene glycol (TEG) and 86.0 mol of terephthalic acid (TPA). The reaction product Tg was 33.6°C, the hydroxyl value was 50.0 mgKOH/g, an acid value of 2.5 mg KOH/mg and the number-average molecular weight was 2700.

Resin A-4: 100 weight parts of Resin A-1 that was obtained as above was fed to a twin-screw kneader at a flow rate of 10 kg/hr and kneaded at 175°C, and 2.3 weight parts of tolylene diisocyanate (TDI) was supplied to a resin mixture during kneading conveyance and kneaded, and Resin A-4 was obtained. The obtained resin Tg was 58.9°C and had Mw/Mn>6.

Resin A-5; A mixture of 80 weight parts of Resin A-2 and 20 weight parts of Resin A-3 that were obtained as above was fed to a twin-screw kneader at a flow rate of 10 kg/hr and kneaded at 175°C, and 1.2 weight parts of tolylene diisocyanate (TDI) was supplied to the resin mixture during kneading conveyance and kneaded, and Resin A-4 [sic] was obtained. The obtained resin Tg was 59.5°C and had Mw/Mn>6.

The following resins were used as styrene type resin (B2) in the present invention.

Resin B-1: 40.0 weight parts of xylene were put inside a nitrogen substituted flask and 77.0 weight parts of styrene, 20.0 weight parts of n-butyl acrylate, 3.0 weight parts of glycidyl methacrylate and 0.5 weight parts of di-t-butylperoxide were continuously dripped for 5 hours under reflux (internal temperature 130°C) by heating with an oil bath; afterward, after polymerizing by continuing a 1 hour reaction, the internal temperature was held at 130°C, 0.5 weight parts of di-t-butylperoxide was added and polymerization was completed by reacting for 2 hours. The obtained resin had the solvent removed by flushing in a vessel of 190°C, 10 mmHg, and Resin B-1 was obtained. The reaction product had a Tg of 58°C, an epoxy equivalents of 4700g/equivalent, the number-average molecular weight of 8200 and a mlecular weight peak at 5000.

Resin B-2: Resin B-2 was obtained by a method identical with Resin B-1 other than having 78.5 weight part of styrene, 21.0 weight parts of n-butyl acrylate and 0.5 weight parts of glycidyl methacrylate as the monomer composition. The reaction product had a Tg of 58°C, an epoxy equivalents of 28400g/equivalent, a number-average molecular weight of 7800 and a molecular weight peak at 50000.

Resin B-3: Resin B-3 was obtained by a method identical with resin B-1 other than having 76.0 weight parts of styrene, 16.0 weight parts of n-butyl acrylate and 8.0 weight parts of glycidyl methacrylate as the monomer composition. The reaction product had a Tg of 59°C, an epoxy equivalents of 1800g/equivalent, a number-average molecular weight of 7500, and a molecular weight peak at 50000.

Resin C-1: A mixture of 99 weight parts of Resin A-4 and 1 weight part of Resin B-1 that were obtained as above was fed to a twin-screw kneader at a flow rate of 10 kg/hr and kneaded at 175°C, and Resin C-1 was obtained. The obtained resin Tg was 59.5 and had Mw/Mn>6.

Resin C-2: A mixture of 80 weight parts of Resin A-4 and 20 weight parts of Resin B-1 that were obtained as above was fed to a twin-screw kneader at a flow rate of 10 kg/hr and kneaded at 175°C, and Resin C-2 was obtained. The obtained resin Tg was 59.7°C and had Mw/Mn>6.

Resin C-3: A mixture of 70 weight parts of Resin A-4 and 30 weight parts of Resin B-1 that were obtained as above was fed to a twin-screw kneader at a flow rate of 10 kg/hr and kneaded at 175°C, and Resin C-3 was obtained. The obtained resin Tg was 59.9°C and had Mw/Mn>6.

Resin C-4: A mixture of 55 weight parts of Resin A-4 and 45 weight parts of Resin B-1 that were obtained as above was fed to a twin-screw kneader at a flow rate of 10 kg/hr and kneaded at 175°C, and Resin C-4 was obtained. The obtained resin Tg was 60.0°C and had Mw/Mn>6.

Resin C-5: 100 weight parts of Resin A-4 that was obtained as above was fed to a twin-screw kneader at a flow rate of 10 kg/hr and kneaded at 175°C, and Resin C-5 was obtained. The obtained resin Tg was 58.9°C and had Mw/Mn>6.

Resin C-6: A mixture of 45 weight parts of Resin A-4 and 55 weight parts of Resin B-1 that were obtained as above was fed to a twin-screw kneader at a flow rate of 10 kg/hr and kneaded at 175°C, and Resin C-6 was obtained. The obtained resin Tg was 60.2°C and had Mw/Mn>6.

Resin C-7: A mixture of 70 weight parts of Resin A-2 and 30 weight parts of Resin B-1 that were obtained as above was fed to a twin-screw kneader at a flow rate of 10 kg/hr and kneaded at 175°C, and Resin C-7 was obtained. The obtained resin Tg was 59.9°C and had Mw/Mn>6.

Resin C-8: A mixture of 70 weight parts of Resin A-4 and 30 weight parts of Resin B-2 that were obtained as above was fed to a twin-screw kneader at a flow rate of 10 kg/hr and kneaded at 175°C, and Resin C-8 was obtained. The obtained resin Tg was 59.8°C and had Mw/Mn>6.

Resin C-9: A mixture of 70 weight parts of Resin A-4 and 30 weight parts of Resin B-3 that were obtained as above was fed to a twin-screw kneader at a flow rate of 10 kg/hr and kneaded at 175°C, an Resin C-9 was obtained. The obtained resin Tg was 60.7°C and had Mw/Mn>6.

Resin C-10: A mixture of 75 weight parts of Resin A-5 and 25 weight parts of Resin B-1 that were obtained as above was fed to a twin-screw kneader at a flow rate of 10 kg/hr and kneaded at 175°C, and Resin C-10 was obtained. The obtained resin Tg was 59.7°C and had Mw/Mn>6.

Resin C-11: 100 weight parts of Resin A-5 that was obtained as above was fed to a twin-screw kneader at a flow rate of 10 kg/hr and kneaded at 175°C, and Resin C-11 was obtained. The obtained resin Tg was 59.5°C and had Mw/Mn>6.

Resin C-12: A mixture of 99 weight parts of Resin A-1 and 1 weight part of Resin B-1 that were obtained as above was fed to a twin-screw kneader at a flow rate of 10 kg/hr and kneaded at 175°C, and 2.3 weight parts of tolylene diisocyanate (TDI) was supplied to the resin mixture during kneading conveyance, and further kneaded, and Resin C-12 was obtained. The obtained resin Tg was 59.5°C and had Mw/Mn>6.

Resin C-13: A mixture of 75 weight parts of Resin A-1 and 25 weight parts of Resin B-1 that were obtained as above was fed to a twin-screw kneader at a flow rate of 10 kg/hr and kneaded at 175°C, and 1.8 weight parts of tolylene diisocyanate (TDI) was fed to a resin compound during kneading conveyance and further kneaded, and Resin C-13 was obtained. The obtained resin Tg was 59.7°C and had Mw/Mn>6.

Resin C-14: A mixture of 55 weight parts of Resin A-1 and 45 weight parts of Resin B-1 that were obtained as above was fed to a twin-screw kneader at a flow rate of 10 kg/hr and kneaded at 175°C, and 1.3 weight parts of tolylene diisocyanate (TDI) was fed to the resin mixture during kneading conveyance and further kneaded, and Resin C-14 was obtained. The obtained resin Tg was 60.0°C and had Mw/Mn>6.

Resin C-15: 100 weight parts of Resin A-1 that was obtained as above was fed to a twin-screw kneader at a flow rate of 10 kg/hr and kneaded at 175°C, and 2.3 weight parts of tolylene diisocyanate (TDI) was fed to the resin mixture during kneading conveyance and further kneaded, and Resin C-15 was obtained. The obtained resin Tg was 58.9°C and had Mw/Mn>6.

Resin C-16: A mixture of 45 weight parts of Resin A-1 and 55 weight parts of Resin B-1 that were obtained as above was fed to a twin-screw kneader at a flow rate of 10 kg/hr and kneaded at 175°C, and 1.1 weight parts of tolylene diisocyanate (TDI) was fed to the resin mixture during kneading conveyance and further kneaded, and Resin C-16 was obtained. The obtained resin Tg was 60.2°C and had Mw/Mn>6.

Resin C-1 7: A mixture of 75 weight parts of Resin A-1 and 25 weight parts of Resin B-1 that were obtained as above was fed to a twin-screw kneader at a flow rate of 10 kg/hr and kneaded at 175°C, and 0 weight parts of tolylene diisocyanate (TDI) was fed to the resin mixture during kneading conveyance and further kneaded, and Resin C-17 was obtained. The obtained resin Tg was 57.3°C and had Mw/Mn>6.

Resin C-1 8: A mixture of 75 weight parts of Resin A-2 and 25 weight parts of Resin B-1 that were obtained as above was fed to a twin-screw kneader at a flow rate of 10 kg/hr and kneaded at 175°C, and 1.8 weight parts of tolylene diisocyanate (TDI) was fed to the resin mixture during kneading conveyance and further kneaded, and Resin C-18 was obtained. The obtained Resin Tg was 56.9°C and had Mw/Mn>6.

Resin C-19: 75 weight parts of Resin A-1 and 25 weight parts of Resin B-2 that were obtained as above was fed to a twin-screw kneader at a flow rate of 10 kg/hr and kneaded at 175°C, and 1.8 weight parts of tolylene diisocyanate (TDI) was fed to the resin mixture during kneader conveyance and further kneaded, and Resin C-19 was obtained. The obtained resin Tg was 59.8°C and had Mw/Mn>6.

Resin C-20: A mixture of 75 weight parts of Resin A-1 and 25 weight parts of Resin B-3 that were obtained as above was fed to a twin-screw kneader at a flow rate of 10 kg/hr and kneaded at 175°C, and 1.8 weight parts of tolylene diisocyanate (TDI) was supplied to the resin mixture during kneading conveyance and further kneaded, and Resin C-20 was obtained. The obtained resin Tg was 60.7°C and had Mw/Mn>6.

Resin C-21: A mixture of 60 weight parts of Resin A-2, 15 weight parts of Resin A-3 and 25 weight parts of Resin B-1 that were obtained as above was fed to a twin-screw kneader at a flow rate of 10 kg/hr and kneaded at 175°C, and 0.9 weight parts of tolylene diisocyanate (TDI) was fed to the resin mixture during kneading conveyance and further kneaded, and Resin C-21 was obtained. The obtained resin Tg was 59.7°C and had Mw/Mn>6.

Resin C-22: A mixture of 80 weight parts of Resin A-2 and 20 weight parts of Resin A-3 that were obtained as above was supplied to a twin-screw kneader at a flow rate of 10 kg/hr, and kneaded at 175°C, and 1.2 weight parts of tolylene diisocyanate (TDI) was fed to the resin mixture and further kneaded, and Resin C-22 was obtained. The obtained resin Tg was 59.5°C and had Mw/Mn>6.

### Example 1

After 6 parts of Carbon Black MA-100 (Mitsubishi Kasei, K.K. product) and 3 parts of polypropylene wax Biscol 660P (Sanyo Kasei K.K. product) for 100 parts of Resin C-1 were dispersed and mixed in a Henschel mixer, then melted and kneaded in a twin-screw kneader PCM30 (Ikegai Ironworks, K.K. product) at 180°C, and melted and kneaded, and bulk toner composite was obtained. This composite was phase ground in a ham'mer mill, finely ground in a jet grinder (Nippon Newmatic Co. product), model IDS 2), then toner particles of average particle size 10 µm (5 µm : less 3 weight%, 20 µm or more : 2 weight%) by flash classification were obtained. The grinding properties of the toner were determined by measuring the volume average particle size after grinding under conditions with the supply rate of the coarse particles to the jet grinder fixed. The extent of the heated roller contamination properties were studied by determining the fixing properties and offset properties using this toner with a commercial copier. Further, one with 0.1% hydrophobic silica (Aerosil R972 Japan Aerosil Co., Ltd. product) mixed with this toner was stored for 24 hours in an environment of temperature 40°C and relative humidity 60%, and the storage properties were studied from the particle cohesion conditions.

### Example 2

A test was executed by methods identical to Example 1 using Resin C-2.

### Example 3

A test was executed by methods identical to Example 1 using Resin C-3.

### Example 4

A test was executed by methods identical to Example 1 using Resin C-4.

### Comparative Example 1

A test was executed by methods identical to Example 1 using Resin C-5.

### Reference Example 1

A test was executed by methods identical to Example 1 using Resin C-6.

### Reference Example 2

A test was executed by methods identical to Example 1 using Resin C-7.

The evaluation Results are shown in Table 1.

**Table 1**

| Example/Comparative Example No. | Example 1 | Example 2 | Example 3 | Example 4 | Comparative Example 1 | Reference Example 1 | Reference Example 2 |
|---|---|---|---|---|---|---|---|
| polyester resin type | A-4 | A-4 | A-4 | A-4 | A-4 | A-4 | A-2 |
| polyester resin weight% | 99 | 80 | 70 | 55 | 100 | 45 | 70 |
| styrene resin type | B-1 | B-1 | B-1 | B-1 | --- | B-1 | B-1 |
| styrene resin weight% | 1 | 20 | 30 | 45 | 0 | 55 | 30 |
| grindability | ○ | ○ | ○ | ○ | ○ | ○ | ○ |
| fixing properties | ○ | ○ | ○ | Δ | ○ | × | ○ |
| offset-resistant properties | ○ | ○ | ○ | ○ | ○ | ○ | × |
| environmental stability | Δ | ○ | ○ | ○ | × | ○ | ○ |
| storage properties | ○ | ○ | ○ | ○ | × | ○ | ○ |

### Example 5

A test was executed by methods identical to Example 1 using Resin C-8.

### Example 6

A test was executed by methods identical to Example 1 using Resin C-9.

### Example 7

A test was executed by methods identical to Example 1 using Resin C-10.

### Comparative Example 2

A test was executed by methods identical to Example 1 using Resin C-11.

**Table 2**

| Example/Comparative Example No. | Example 5 | Example 6 | Example 7 | Comparative Example 2 | Example 8 |
|---|---|---|---|---|---|
| polyester resin type | A-4 | A-4 | A-5 | A-5 | A-5 |
| polyester resin weight% | 70 | 70 | 75 | 100 | 75 |
| styrene resin type | B-2 | B-3 | B-1 | --- | B-1 |
| styrene resin weight% | 30 | 30 | 25 | 0 | 25 |
| grindability | ○ | ○ | ○ | ○ | ○ |
| fixing properties | ○ | ○ | ○ | ○ | ○ |
| offset-resistant properties | ○ | ○ | ○ | ○ | ○ |
| environmental stability | ○ | ○ | ○ | × | ○ |
| storage properties | ○ | ○ | ○ | × | ○ |

### Example 8

A test was executed by methods identical to Example 1 other than the obtainment of a bulk toner composite by dispersing and mixing 6 parts Carbon Black MA-100 (Mitsubishi Kasei, K.K. product) and 3 part polypropylene wax Biscol 660P (Sanyo Kasei Industries, K.K. product) for 75 weight parts of Resin A-5 and 25 weight parts of Resin B-1 in a Henschel mixer, then melting and kneading in a PCM30 (Ikegai Ironworks, K.K. product) at 150°C.

The evaluation results are shown in Table 2.

The inferiority of the environmental stability for toner without the use of styrene type resin (B2) was confirmed from the results set forth above.

### Example 9

After 6 parts Carbon Black MA-100 (Mitsubishi Kasei, K.K. product) and 3 parts polypropylene wax Biscol 660P (Sanyo Kasei Industries, K.K. product) for 100 parts of Resin C-12 were dispersed and mixed in a Henschel mixer, then melted and kneaded at 150°C in a twin-screw kneader PCM30 (Ikegai Ironworks, K.K. product), bulk toner composite was obtained. This composite was phase ground in a hammer mill and finely ground in a jet grinder (Japan Newmatic Co. product Model IDS 2), then toner particles of average particle size 10 µm (5 µm or less : 3 weight%, 20 µm or more : 2 weight%) by flash classification were obtained. The toner grinding properties were determined by measuring the volume average particle size after grinding by conditions with the feed rate of the coarse particles to the jet grinder fixed. The extent of the heated roller contamination was studied by determining the fixing properties and offset properties using this toner with a commercial copier. Further, one with 0.1% hydrophobic silica (Aerosil R972, Japan Aerosil Co. product) mixed with this toner was stored for 24 hours in an environment of temperature 40°C and relative humidity 60%, and the storage properties were studied from the particle cohesion conditions. These results are shown in Table 3.

### Example 10

A test was executed with methods identical to Example 9 using Resin C-13.

### Example 11

A test was executed with methods identical to Example 9 using Resin C-14.

### Comparative Example 3

A test was executed with methods identical to Example 9 using Resin C-15.

### Reference Example 3

A test was executed with methods identical to Example 9 using Resin C-16.

### Reference Example 4

A test was executed with methods identical to Example 9 using Resin C-17.

### Reference Example 5

A test was executed with methods identical to Example 9 using Resin C-18.
The evaluation results are shown in Table 3-1 and Table 3-2.

**Table 3-1**

| Example/Comparative Example No. | Example 9 | Example 10 | Example 11 |
|---|---|---|---|
| polyester resin (A) type | A-1 | A-1 | A-1 |
| polyester resin (A) weight% | 99 | 75 | 55 |
| styrene resin (B) type | B-1 | B-1 | B-1 |
| styrene resin (B) weight% | 1 | 25 | 45 |
| grindability | ○ | ○ | ○ |
| fixing properties | ○ | ○ | Δ |
| offset-resistant properties | ○ | ○ | ○ |
| environmental stability | Δ | ○ | ○ |
| storage properties | ○ | ○ | ○ |

**Table 3-2**

| Example/Comparative Example No. | Comparative Example 3 | Reference Example 3 | Reference Example 4 | Reference Example 5 |
|---|---|---|---|---|
| polyester resin (A) type | A-1 | A-1 | A-1 | A-2 |
| polyester resin (A) weight% | 100 | 45 | 75 | 75 |
| styrene resin (B) type | --- | B-1 | B-1 | B-1 |
| styrene resin (B) weight% | 0 | 55 | 25 | 25 |
| grindability | ○ | ○ | ○ | ○ |
| fixing properties | ○ | × | ○ | ○ |
| offset-resistant properties | Δ | ○ | × | × |
| environmental stability | × | ○ | ○ | ○ |
| storage properties | × | ○ | ○ | ○ |

### Example 12

A test was executed with methods identical to Example 9 using Resin C-19.

### Example 13

A test was executed with methods identical to Example 9 using Resin C-20.

### Example 14

A test was executed with methods identical to Example 9 using Resin C-21.

### Comparative Example 4

A test was executed with methods identical to Example 9 using Resin C-22.

### The evaluation results are shown in Table 4.

The inferiority of the environmental stability and some decrease of offset-resistant properties for toner without the use of styrene type resin (B2) were confirmed from the results set forth above.

**Table 4**

| Example/Comparative Example No. | Example 12 | Example 13 | Example 14 | Comparative Example 4 |
|---|---|---|---|---|
| polyester resin (A) type | A-1 | A-1 | A-2 / A-3 | A-2 / A-3 |
| polyester resin (A) weight% | 75 | 75 | 60/15 | 80 / 20 |
| styrene resin (B) type | B-2 | B-3 | B-1 | --- |
| styrene resin (B) weight% | 25 | 25 | 25 | 0 |
| grindability | ○ | ○ | ○ | ○ |
| fixing properties | ○ | ○ | ○ | ○ |
| offset-resistant properties | ○ | ○ | ○ | Δ |
| environmental stability | ○ | ○ | ○ | × |
| storage properties | ○ | ○ | ○ | × |

The evaluation conditions of the fixing properties were modified for the following examples and comparative examples. The details are discussed below.

For the fixing properties, after an unfixed image was formed by a copier with a commercial electrophotographic copier, this unfixed image was fixed using a heated roller with the fixed part of the commercial copier reconstructed. The toner fixing was carried out with the heated roller fixing rate as 190 mm/sec and the heated roller temperature changed each 5°C. A load of 1.0 kg was applied by rubber (Tonbow Empitsu Co. product) by rubbing the obtained fixed image and being rubbed 10 times, and the image density before and after this rubbing was measured by a MacBeth-type refractive densitometer. The change of the image density lowering percentage of the image density at each temperature had a lowest fixing temperature that became 60% or more as the lowest fixing temperature. Further, the heated roller fixing devices that were used here were ones without silicone oil supply structures. Also, the environmental I conditions were normal I temperature and normal I pressure (temperature 22°C, relative humidity 55%).
- ○ :: lowest fixing temperature ≦ 165°C
- Δ :: 185°C ≧ lowest fixing temperature > 165°C
- × :: lowest fixing temperature > 185°C

Further, repeat syntheses of polyester resin (A2) and epoxy group containing styrene type resin (B2) were used.

Resin A-6: A polyester resin (A-6) was prepared in a similar manner to the preparation of resin (A-1). The resin had a Tg of 45° C, a hydroxyl value of 22.0 mg KOH/mg, an acid value of 2.1 mg KOH/mg, a number-average molecular weight of 2800 and a weight-average molecular weight of 15600.

Resin A-7: A polyester resin (A-7) was prepared in a similar manner to the preparation of resin (A-2). The resin had a Tg of 56° C, a hydroxyl value of 2.2 mg KOH/mg, an acid value of 20.9 mg KOH/mg, a number-average molecular weight of 2400 and a weight-average molecular weight of 6900.

Resin A-8: A polyester resin (A-8) was prepared in a similar manner to the preparation of resin (A-3). The resin had a Tg of 33.6° C, a hydroxyl value of 56.3 mg KOH/mg, a number-average molecular weight of 2700 and a weight-average molecular weight of 11000.

Resin B-4: An epoxy group containing styrene type resin was obtained by methods identical with B-1. The epoxy equivalents of the resin were 4700 g/equivalent and the Tg was 58°C and the number-average molecular weight was 8300.

Resin B-5: An epoxy group containing styrene type resin was obtained by methods identical with B-2. The epoxy equivalents of the reaction products was 28400 g/equivalent, and the Tg was 58°C and the number-average molecular weight was 7900.

Resin B-6: An epoxy group containing styrene type resin was obtained by methods identical with B-3. The reaction product epoxy equivalent was 1800 g/equivalent, and the Tg was 59°C and the number-average molecular weight was 6200.

Resin C-23: A mixture of 97 weight parts of Resin A-6 and 3 weight parts of Resin B-4 that were obtained as above and 3 weight parts of FT-100 (Nippon Seiro K.K. product, melting point 98°C) as the wax was fed to a twin-screw kneader at a flow rate of 10 kg/hr and kneaded at 175°C, and 2.3 weight parts of tolylene diisocyanate (TDI) was fed to the resin mixture during kneading conveyance and further kneaded, and Resin C-23 was obtained. The obtained resin Tg was 58.8°C and had Mw/Mn>3.

Resin C-24: A mixture of 75 weight parts of resin A-6 and 25 weight parts of Resin B-4 that were obtained as above and 3 weight parts of FT-100 (Nippon Seiro, K.K. product, melting point 98°C) as the wax was fed to a twin-screw kneader at a flow rate of 10 kg/hr and kneaded at 175°C, 1.8 weight parts of tolylene diisocyanate (TDI) was fed to the resin mixture during kneading conveyance and further kneaded, and Resin C-24 was obtained. The obtained resin Tg was 59.1°C and had Mw/Mn>3.

Resin C-25: A mixture of 60 weight parts of Resin A-6 and 40 weight parts of Resin B-4 that were obtained as above and 3 weight parts of FT-100 (Nippon Seiro, K.K. product, melting point 98°C) as the wax was fed to a twin-screw kneader at a flow rate of 10 kg/hr and kneaded at 175°C, and 1.3 weight parts of tolylene diisocyanate (TDI) was fed to the resin mixture during kneading conveyance and further kneaded, and Resin C-25 was obtained. The obtained resin Tg was 59.2°C and had Mw/Mn>3.

Resin C-26: 100 weight parts of Resin A-6 that was obtained as above and 3 weight parts of FT-100 (Nippon Seiro, K.K. product, melting point 98°C) as the wax was fed to a twin-screw kneader at a flow rate of 10 kg/hr and kneaded at 175°C, and 2.3 weight parts of tolylene diisocyanate (TDI) was fed to the resin mixture during kneading conveyance and further kneaded, and Resin C-26 was obtained. The obtained resin Tg was 58.2°C and had Mw/Mn>3.

Resin C-27: A mixture of 45 weight parts of Resin A-6 and 55 weight parts of Resin B-4 that were obtained as above and 3 weight parts of FT-100 (Nippon Seiro, K.K. product, melting point 98°C) as the wax was fed to a twin-screw kneader at a flow rate of 10 kg/hr and kneaded at 175°C, and 1.1 weight parts of tolylene diisocyanate (TDI) was fed to the resin mixture during kneading conveyance and further kneaded, and Resin C-27 was obtained. The obtained resin Tg was 59.5°C and had Mw/Mn>3.

Resin C-28: A mixture of 75 weight parts of Resin A-6 and 25 weight parts of Resin B-4 that were obtained as above and 3 weight parts of FT-100 (Nippon Seiro, K.K. product, melting point 98°C) as the wax was fed to a twin-screw kneader at a flow rate of 10 kg/hr and kneaded at 175°C, and 0 weight parts of tolylene diisocyanate (TDI) was fed to the resin mixture during kneading conveyance and further kneaded, and Resin C-28 was obtained. The obtained resin Tg was 56.6°C and had Mw/Mn>3.

Resin C-29: A mixture of 75 weight parts of Resin A-7 and 25 weight parts of Resin B-4 that were obtained as above and 3 weight parts of FT-100 (Nippon Seiro, K.K. product, melting point 98°C) as the wax was fed to a twin-screw kneader at a flow rate of 10 kg/hr and kneaded at 175°C, and 1.8 weight parts of tolylene diisocyanate (TDI) was fed to the resin mixture during kneading conveyance and further kneaded, and Resin C-29 was obtained. The obtained resin Tg was 56.2°C and had Mw/Mn>3.

Resin C-30: A mixture of 75 weight parts of Resin A-6 and 25 weight parts of Resin B-5 that were obtained as above and 3 weight parts of FT-100 (Nippon Seiro, K.K. product, melting point 98°C) as the wax were fed to a twin-screw kneader at a flow rate of 10 kg/hr and kneaded at 175°C, and 1.8 weight parts of tolylene diisocyanate (TDI) was fed to the resin mixture during kneading conveyance and further kneaded, and Resin C-30 was obtained. The obtained resin Tg was 59.1°C and had Mw/Mn>3.

Resin C-31: A mixture of 75 weight parts of Resin A-6 and 25 weight parts of Resin B-6 that were obtained as above and 3 weight parts of FT-100 (Nippon Seiro, K.K. product, melting point 98°C) as the wax was fed to a twin-screw kneader machine at a flow rate of 10 kg/hr and kneaded at 175°C, and 1.8 weight parts of tolylene diisocyanate (TDI) was fed to the resin mixture during kneading conveyance and further kneaded, and Resin C-31 was obtained. The obtained resin Tg was 60.0°C and had Mw/Mn>3.

Resin C-32: A mixture of 60 weight parts of Resin A-7, 15 weight parts of Resin A-8 and 25 weight parts of Resin B-4 that were obtained as above and 3 weight parts of FT-100 (Nippon Seiro, K.K. product, melting point 98°C) as the wax was fed to a twin-screw kneader at a flow rate of 10 kg/hr and kneaded at 175°C, and 0.9 weight parts of tolylene diisocyanate (TDI) was fed to the resin mixture during kneading conveyance and further kneaded, and Resin C-32 was obtained. The obtained resin Tg was 59.0°C and had Mw/Mn>3.

Resin C-33: A mixture of 80 weight parts of Resin A-7 and 20 weight parts of Resin A-8 that were obtained as above and 3 weight parts of FT-100 (Nippon Seiro, K.K. product, melting point 98°C) as the wax was fed to a twin-screw kneader at a flow rate of 10 kg/hr and kneaded at 175°C, and 1.2 weight parts of tolylene diisocyanate (TDI) was fed to the resin mixture during kneading conveyance and further kneaded, and Resin C-33 was obtained. The obtained resin Tg was 58.8°C and had Mw/Mn>3.

Resin C-34: A mixture of 75 weight parts of Resin A-6 and 25 weight parts of Resin B-4 that were obtained as above was fed to a twin-screw kneader at a flow rate of 10 kg/hr and kneaded at 175°C, and 1.8 weight parts of tolylene diisocyanate (TDI) was fed to the resin mixture during kneading conveyance and further kneaded, and Resin C-34 was obtained. The obtained resin Tg was 59.7°C and had Mw/Mn>3.

Resin C-35: A mixture of 75 weight parts of Resin A-6 and 25 weight parts of Resin B-4 that were obtained as above and 1 weight parts of FT-100 (Nippon Seiro, K.K. product, melting point 98°C) as the wax was fed to a twin-screw kneader at a flow rate of 10 kg/hr and kneaded at 175°C, and 1.8 weight parts of tolylene diisocyanate (TDI) was supplied to the resin mixture during kneading conveyance and further kneaded, and Resin C-35 was obtained. The obtained resin Tg was 59.5°C and had Mw/Mn>3.

Resin C-36: A mixture of 75 weight parts of Resin A-6 and 25 weight parts of Resin B-4 that were obtained as above and 10 weight parts of FT-100 (Nippon Seiro, K.K. product, melting point 98°C) as the wax was fed to a twin-screw kneader at a flow rate of 10 kg/hr and kneaded at 175°C, and 1.8 weight parts of tolylene diisocyanate (TDI) was fed to the resin mixture during kneading conveyance and further kneaded, and Resin C-36 was obtained. The obtained resin Tg was 54.9°C and had Mw/Mn>3.

Resin C-37: A mixture of 75 weight parts of Resin A-6 and 25 weight parts of Resin B-4 that were obtained as above and 18 weight parts of FT-100 (Nippon Seiro, K.K. product, melting point 98°C) as the wax was fed to a twin-screw kneader at a flow rate of 10 kg/hr and kneaded at 175°C, and 1.8 weight parts of tolylene diisocyanate (TDI) was fed to the resin mixture during kneading conveyance and further kneaded, and Resin C-37 was obtained. The obtained resin Tg was 53.2°C and had Mw/Mn>3.

Resin C-38: A mixture of 75 weight parts of Resin A-6 and 25 weight parts of Resin B-4 that were obtained as above and 3 weight parts of HNP-0190 (Nippon Seiro, K.K. product, melting point 84°C) as the wax was fed to a twin-screw kneader at a flow rate of 10 kg/hr and kneaded at 175°C, and 1.8 weight parts of tolylene diisocyanate (TDI) was fed to the resin mixture during kneading conveyance and further kneaded, and Resin C-38 was obtained. The obtained resin Tg was 57.8°C and had Mw/Mn>3.

Resin C-39: A mixture of 75 weight parts of Resin A-6 and 25 weight parts of Resin B-4 that were obtained as above and 3 weight parts of NP-105 (Mitsui Chemicals, K.K. product, melting point 148°C) as the wax was fed to a twin-screw kneader at a flow rate of 10 kg/hr and kneaded at 175°C, and 1.8 weight parts of tolylene diisocyanate (TDI) was fed to the resin mixture during kneading conveyance and further kneaded, and Resin C-39 was obtained. The obtained resin Tg was 59.4°C and had Mw/Mn>3.

Resin C-40: A mixture of 75 weight parts of Resin A-6 and 25 weight parts of Resin B-1 that were obtained as above and 3 weight parts of refined Carnauba Wax No. 1 Powder (Japan Wax, K.K. product, melting point 86°C) as the wax was fed to a twin-screw kneader at a flow rate of 10 kg/hr and kneaded at 175°C, and 1.8 weight parts of tolylene diisocyanate (TDI) was fed to the resin mixture during kneading conveyance and further kneaded, and Resin C-40 was obtained. The obtained resin Tg was 57.4°C and had Mw/Mn>3.

Resin C-41: 100 weight parts of Resin A-6 that was obtained as above was fed to a twin-screw kneader at a flow rate of 10 kg/hr and kneaded at 175°C, and 2.3 weight parts of tolylene diisocyanate (TDI) was fed to the resin mixture during kneading conveyance and further kneaded, and Resin C-41 was obtained. The obtained resin Tg was 58.2°C and had Mw/Mn>3.

### Example 15

After 6 parts of Carbon Black (MA-100, Mitsubishi Chemical Co. product) and 1.5 parts charge control agent BONTRON E-84, Orient Chemical Industries Co. product) for 100 parts of Resin C-23 were dispersed and mixed in a Henschel mixer and kneaded at 120°C in a twin-screw extruder, PCM-30 (Ikegai Ironworks Co. Product), a bulk toner composite was obtained. This toner composite was phase ground by a hammer mill. [This] was finely ground by a jet grinder (Nippon Nyuumachikku Co. product Model IDS2), then a toner fine powder of average particle size 10 *µ*m (5 *µ*m or less : 3 weight%, 20 *µ*m or more 2 weight%) was obtained by flash classification. Then, hydrophobic silica (R-972, Aerosil Co. product) was added from the outside at a proportion bringing about 0.5 parts for 100 parts of the aforementioned toner. Toner was obtained by mixing this with a Henschel mixer. The fixing properties, offset-resistant properties and blocking-resistant properties (storage properties) were studied using this toner. These results are shown in Table 5-1 and Tabel 5-2.

### Example 16

A test was executed with methods identical to Example 15 using Resin C-24.

### Example 17

A test was executed with methods identical to Example 15 using Resin C-25.

### Comparative Example 5

A test was executed with methods identical to Example 15 using Resin C-26.

### Reference Example 6

A test was executed with methods identical to Example 15 using Resin C-27.

### Reference Example 7

A test was executed with methods identical to Example 15 using Resin C-28.

### Reference Example 8

A test was executed with methods identical to Example 15 using Resin C-29.
The evaluation results are shown in Table 5-1 and Table 5-2.

**Table 5-1**

| Example/Comparative Example No. | | Example 15 | Example 16 | Example 17 | Comparative Example 5 |
|---|---|---|---|---|---|
| Manufacture of Resin C | Resin C | C-23 | C-24 | C-25 | C-26 |
| | Resin A type | A-6 | A-6 | A-6 | A-6 |
| | Resin A weight part | 97 | 75 | 60 | 100 |
| | Resin B type | B-4 | B-4 | B-4 | --- |
| | Resin B weight part | 3 | 25 | 40 | 0 |
| | Wax type | FT-100 | FT-100 | FT-100 | FT-100 |
| | Wax weight part | 3 | 3 | 3 | 3 |
| | Tolylene Diisocyanate weight part | 2.3 | 1.8 | 1.3 | 2.3 |
| Manufacture of Toner | Resin C weight part | 100 | 100 | 100 | 100 |
| | Carbon Black weight part | 6 | 6 | 6 | 6 |
| | Charge Control agent weight part | 1.5 | 1.5 | 1.5 | 1.5 |
| | wax type | | | | |
| | wax weight part | 0 | 0 | 0 | 0 |
| fixing properties | | ○ | ○ | ○ | ○ |
| offset-resistant properties | | ○ | ○ | ○ | ○ |
| blocking-resistant properties | | ○ | ○ | ○ | Δ |

**Table 5-2**

| Example/Comparative Example No. | | Reference Example 6 | Reference Example 7 | Reference Example 8 |
|---|---|---|---|---|
| Manufacture of Resin C | Resin C | C-27 | C-28 | G29 |
| | Resin A type | A-6 | A-6 | A-7 |
| | Resin A weight part | 45 | 75 | 75 |
| | Resin B type | B-4 | B-4 | B-4 |
| | Resin B weight part | 55 | 25 | 25 |
| | Wax type | FT-100 | FT-100 | FT-100 |
| | Wax weight part | 3 | 3 | 3 |
| | Tolylene Diisocyanate weight part | 1.1 | 0 | 1.8 |
| Manufacture of Toner | Resin C weight part | 100 | 100 | 100 |
| | Carbon Black weight part | 6 | 6 | 6 |
| | Charge Control agent weight part | 1.5 | 1.5 | 1.5 |
| | wax type | | | |
| | wax weight part | 0 | 0 | 0 |
| fixing properties | | Δ | ○ | ○ |
| offset-resistant properties | | ○ | × | × |
| blocking-resistant properties | | ○ | × | × |

### Example 18

A test was executed with methods identical to Example 15 using Resin C-30.

### Example 19

A test was executed with methods identical to Example 15 using Resin C-31.

**Table 6**

| Example/Comparative Example No. | | Example 18 | Example 19 | Example 20 | Comparative Example 6 |
|---|---|---|---|---|---|
| Manufacture of Resin C | Resin C | C-30 | C-31 | C-32 | C-33 |
| | Resin A type | A-6 | A-6 | A-7/A-8(*) | A-7/A-8(*) |
| | Resin A weight part | 75 | 75 | 60/15 | 80/20 |
| | Resin B type | B-5 | B-6 | B-4 | --- |
| | Resin B weight part | 25 | 25 | 25 | 0 |
| | Wax type | FT-100 | FT-100 | FT-100 | FT-100 |
| | Wax weight part | 3 | 3 | 3 | 3 |
| | Tolylene Diisocyanate weight part | 1.8 | 1.8 | 0.9 | 1.2 |
| Manufacture of Toner | Resin C weight part | 100 | 100 | 100 | 100 |
| | Carbon Black weight part | 6 | 6 | 6 | 6 |
| | Charge Control Agent weight part | 1.5 | 1.5 | 1.5 | 1.5 |
| | Wax type | | | | |
| | Wax weight part | 0 | 0 | 0 | 0 |
| fixing properties | | ○ | ○ | ○ | ○ |
| offset-resistant properties | | ○ | ○ | ○ | ○ |
| blocking-resistant properties | | ○ | ○ | ○ | Δ |

| | | | | | |
|---|---|---|---|---|---|
| *hydroxyl value: 13.0 | | | | | |

### Example 20

A test was executed with methods identical to Example 15 using Resin C-32.

### Comparative example 6

A test was executed with methods identical to Example 15 using Resin C-33.

The evaluation results are shown in Table 6.

### Reference Example 9

A test was executed with methods identical to Example 15 using Resin C-34.

### Example 21

A test was executed with methods identical to Example 15 using Resin C-35.

### Example 22

A test was executed with methods identical to Example 15 using Resin C-36.

### Reference Example 10

A test was executed with methods identical to Example 15 using Resin C-37.

The evaluation results are shown in Table 7.

**Table 7**

| Example/Comparative Example No. | | Reference Example 9 | Example 21 | Example 22 | Reference Example 10 |
|---|---|---|---|---|---|
| Manufacture of Resin C | Resin C | C-34 | C-35 | C-36 | C-37 |
| | Resin A type | A-6 | A-6 | A-6 | A-6 |
| | Resin A weight part | 75 | 75 | 75 | 75 |
| | Resin B type | B-4 | B-4 | B-4 | B-4 |
| | Resin B weight part | 25 | 25 | 25 | 25 |
| | Wax type | --- | FT-100 | FT-100 | FT-100 |
| | Wax weight part | 0 | 1 | 10 0 | 18 |
| | Tolylene Diisocyanate weight part | 1.8 | 1.8 | 1.8 | 1.8 |
| Manufacture of Toner | Resin C weight part | 100 | 100 | 100 | 100 |
| | Carbon Black weight part | 6 | 6 | 6 | 6 |
| | Charge Control Agent weight part | 1.5 | 1.5 | 1.5 | 1.5 |
| | Wax type | | | | |
| | Wax weight part | 0 | 0 | 0 | 0 |
| fixing properties | | Δ | ○ | ○ | ○ |
| offset-resistant properties | | × | ○ | ○ | ○ |
| blocking-resistant properties | | ○ | ○ | ○ | × |

### Example 23

A test was executed with methods identical to Example 15 using Resin C-38.

### Example 24

A test was executed with methods identical to Example 15 using Resin C-39.

### Example 25

A test was executed with methods identical to Example 15 using Resin C-40.

### Comparative Example 7

A test was executed with methods identical to Example 15 other than 6 parts Carbon Black (MA-100, Mitsubishi Chemical Co. product), 1.5 parts charge control agent (BONTRON E-84, Orient Chemical Industries Co. product) and 3 weight parts FT-100 (Nippon Seiro, K.K. product, melting point 98°C) for 100 parts of resin C-41 being dispersed and mixed in a Henschel mixer.

The evaluation results are shown in Table 8.

A decrease of the balance of fixing properties, offset-resistant properties and blocking-resistant (storage properties) for toner without structural unit derived from styrene type resin (B), structural unit derived from epoxy group (C) and/or wax (F) was confirmed from the results above.

**Table 8**

| Example/Comparative Example No. | | Example 23 | Example 24 | Example 25 | Comparative Example 7 |
|---|---|---|---|---|---|
| Manufacture of Resin C | Resin C | C-38 | C-39 | C-40 | C-41 |
| | Resin A type | A-6 | A-6 | A-6 | A-6 |
| | Resin A weight part | 75 | 75 | 75 | 100 |
| | Resin B type | B-4 | B-4 | B-4 | --- |
| | Resin B weight part | 25 | 25 | 25 | 0 |
| | Wax type | HNP-0190 | NP055 | carnauba 1 | --- |
| | Wax weight part | 3 | 3 | 3 | 0 |
| | Tolylene Diisocyanate weight part | 1.8 | 1.8 | 1.8 | 2.3 |
| Manufacture of Toner | Resin C weight part | 100 | 100 | 100 | 100 |
| | Carbon Black weight part | 6 | 6 | 6 | 6 |
| | Charge Control Agent weight part | 1.5 | 1.5 | 1.5 | 1.5 |
| | Wax type | | | | FT100 |
| | Wax weight part | 0 | 0 | 0 | 3 |
| fixing properties | | ○ | ○ | ○ | ○ |
| offset-resistant properties | | ○ | ○ | ○ | ○ |
| blocking-resistant properties | | ○ | ○ | ○ | Δ |

Examples in which styrenic resin (H) was used are shown below.Evaluations in these examples were conducted in the same manner as (Example 15) except that fixed image was rubbed 10 times applying 1.0 Kg load with a sand rubber (manufactured by Tombow pencil Co. LTD.) in fixing properties evaluations.

### Preparation of Resin (A-9)

In a 5-liter four-necked flask equipped with a reflux condenser, water separator, nitrogen gas inlet tube, thermometer and stirrer, 28.5 mol of "Polyol KB300" (Prepared by Mitsui Chemicals, Inc.), 66.5 mol of ethylene glycol (EG), 5.0 mol of trimethylolpropane (TMP), 90.0 mol of terephthalic acid (TPA) and 19.0 mol of benzoic acid (Benz A) were charged. While introducing nitrogen into the flask, dehydration condensation was carried out at 180 to 240°C, whereby a resin (A-9) was obtained.
The reaction product had a Tg of 53°C, a hydroxyl value of 9.0 mg KOH/mg, an acid value of 4.0 mg KOH/mg and a peak molecular weight measured by GPC of 7100.

### Preparation of Resin (A-10)

A resin (A-10) was prepared in a similar manner to the preparation of resin (A-9) except that the amounts of starting materials are changed to 28.5 mol of "Polyol KB300" (Prepared by Mitsui Chemicals, Inc.), 66.5 mol of ethylene glycol (EG), 5.0 mol of trimethylolpropane (TMP), 99 mol of terephthalic acid (TPA) and 20.0 mol of benzoic acid (Benz A). The reaction product had a Tg of 56°C, a hydroxyl value of 2.2 mg KOH/mg, an acid value of 20.9 mg KOH/mg and a peak molecular weight measured by GPC of 6300.

### Preparation of Resin (A-11)

A resin (A-11) was prepared in a similar manner to the preparation of resin (A-9) except that the kinds and the amounts of starting materials are changed to 22.0 mol of "Polyol KB300" (Prepared by Mitsui Chemicals, Inc.), 8.0 mol of trimethylolpropane (TMP), 50.0 mol of ethylene glycol (EG), 20.0 mol of triethylene glycol (TEG) and 99 mol of terephthalic acid (TPA). The reaction product had a Tg of 33.6°C, a hydroxyl value of 56.3 mg KOH/mg, an acid value of 1.9 mg KOH/mg and a peak molecular weight measured by GPC of 7200.

### Preparation of Resin (A-12)

A resin (A-12) was prepared in a similar manner to the preparation of resin (A-9) except that the kinds and the amounts of starting materials are changed to 24.0 mol of "Polyol KB300" (Prepared by Mitsui Chemicals, Inc.), 12.0 mol of trimethylolpropane (TMP), 56.0 mol of ethylene glycol (EG) and 85.0 mol of terephthalic acid (TPA). The reaction product had a Tg of 37.0°C, a hydroxyl value of 89.0 mg KOH/mg, an acid value of 11.0 mg KOH/mg and a peak molecular weight measured by GPC of 4900.

### Preparation of Resin (D-1)

A flask was flushed with nitrogen and charged with 74 parts by weight of styrene, 23.5 parts by weight of n-butyl acrylate and 1.0 parts by weight of methacrylic acid as monomers. The mixture was heated in an oil bath and polymerized in bulk for 6 hours by maintaining the internal temperature at 120°C. A conversion of 40% was obtained by the bulk polymerization. In the next step, 50 parts by weight of xylene were added and the resulting solution was continuously added over 9 hours with a solution obtained by dissolving 0.34 parts by weight of 1,1-bis-(t-butylperoxy)-3,3,5-trimethylcyclohexane in 60 parts by weight of xylene while maintaining the internal temperature at 110°C, then the polymerization was continued for further 2 hours.

Thereafter 0.2 parts by weight of di-t-butyl peroxide was added and reaction was continued for further 2 hours while maintaining the internal temperature at 130°C. Then 0.5 parts by weight of di-t-butyl peroxide was added and reaction was continued for further 2 hours at the same temperature. The polymerization was completed after the mixture was diluted with 123.3 parts by weight of xylene. The resulting polymer(D-1-1) had a molecular weight peak at 350000 and a Tg of 55°C.

Another flask was flushed with nitrogen and charged with 100 parts by weight of xylene. A solution of 82 parts by weight of styrene, 18 parts by weight of n-butyl acrylate and 3 parts by weight of t-butyl peroxy-2-ethylhexanoate was added to the flask over 5 hours, while maintaining the internal temperature of the flask at 138°C using an oil bath, and the flask was kept under reflux, then the reaction was continued for 1 hour so that the monomers polymerized.

Thereafter 0.3 parts by weight of t-butyl peroxy-2-ethylhexanoate was added and reaction was continue-d for further 1 hours while maintaining the internal temperature at 98°C. Then 0.5 parts by weight of t-butyl peroxy-2-ethylhexanoate was added and reaction was continued for further 2 hours at the same temperature to complete the polymerization. The resulting polymer (D-1-2) had a molecular weight peak at 12000 and a Tg of 56.5°C.

40 parts by weight of the polymer (D-1-1) and 60 parts by weight of polymer (D-1-2) were mixed and flashed into a vessel maintained at 190°C and 10 mmHg so that solvents contained in the polymers are removed. The resulting mixed polymer (D-1) had a Tg of 56.1 °C and a Mw/Mn of larger than 3.

### Preparation of Resin (C-42)

A mixture of 70 parts by weight of resin (A-9) obtained above, 25 parts by weight of resin (A-11) and 5 parts by weight of resin (B-1) was fed to a twin screw kneader at a flow rate of 10 kg/hr and was kneaded at 175°C.
Further 3.0 parts by weight of tolylene diisocyanate (TDI) was fed to the resulting resin mixture under kneading and delivery. Kneading was continued and then resin (C-42) was obtained.
The resulting polymer had a Tg of 59.4° C and a Mw/Mn of larger than 3.

### Preparation of Resin (C-43)

A mixture of 70 parts by weight of resin (A-10) obtained above, 25 parts by weight of resin (A-11) and 5 parts by weight of resin (B-1) was fed to a twin screw kneader at a flow rate of 10 kg/hr and was kneaded at 175°C.
Further 3.0 parts by weight of tolylene diisocyanate (TDI) was fed to the resulting resin mixture under kneading and delivery. Kneading was continued and then resin (C-43) was obtained.
The resulting polymer had a Tg of 56.6°C and a Mw/Mn of larger than 3.

### Example 26

85 Parts by weight of resin (C-42) powder and 15 Parts by weight of resin (D-1) powder were mixed in a V-blender (available from TOKUJIYU KOSAKUSHO:KK). 100 parts by weight of the mixture obtained above, 6 parts by weight of carbon black (MA-100, available from MITSUBISHI CHEMICAL INDUSTRIES, LTD.), 1.5 parts by weight of a charge controlling agent (BONTRON E-84, available from ORIENT CHEMICAL CO., LTD.) and 3 parts by weight of polypropylene wax (Biscol 660P, available from SANYO CHEMICAL INDUSTRIES, LTD.) were dispersed each other and mixed in a Henschel mixer. Then the mixture was melted and kneaded at 120°C. in a twin-screw kneader PCM 30 (available from IKEGAKI TEKKO LTD.) to obtain clustery toner compositions.
These compositions were granulated with a hammer mill, followed by finely pulverizing them with a jet pulverizer (IDS 2 Type, available from NIPPON NEWMATIC CO., LTD.) and then classifying by airborne classification to obtain toner fine particles having an average particle size of 10 microns (5 *µ*m or less : 3 weight %; 20 *µ*m or more :2 weight %).
Then, 100 parts by weight of the toner fine particles described above were mixed with 0.5 parts by weight of externally added hydrophobic silica ("Aerosil R-972", trade name; product of Nippon Aerosil Co., Ltd.) in a Henschel mixer to obtain a toner product. The fixing properties, offset-resistant properties and blocking-resistant properties (storage properties) were studied using the toner product. The results are shown in Table 9.

### Example 27

The experiment was conducted in a similar manner to the example 26 except that 85 parts by weight of resin (C-43) and 15 parts by weight of resin (D-1) were used. The results are shown in Table 9.

**Table 9**

| Example/Comparative Example No. | | Example 26 | Example 27 |
|---|---|---|---|
| Manufacture of Resin C | Resin C | C-42 | C-43 |
| | Resin A type | A-9/A-11 | A-10/A-11 |
| | Resin A weight part | 70/25 | 70/25 |
| | Resin A acid value (mgKOH/g) | 3.4 | 15.9 |
| | Resin A hydroxyl value (mgKOH/g) | 21.4 | 16.4 |
| | Resin B type | B-1 | B-1 |
| | Resin B weight part | 5 | 5 |
| Manufacture of Binder Resin | Resin C type | C-42 | C-43 |
| | Resin D (styrenic resin) | D-1 | D-1 |
| | C/D (weight part) | 85/15 | 85/15 |
| fixing properties | | ○ | ○ |
| offset-resistant properties | | ○ | ○ |
| blocking-resistant properties | | ○ | ○ |

It was confirmed from the results above that A toner having excellent fixing properties at low temperatures and blocking-resistant properties is obtainable from the combination of a resin comprises a structural unit having a polyester structure (A), a structural unit derived from styrene type resin (B) and an structural unit derived from epoxy group (C) and a styrenic resin (H), too.

Lastly, fixing properties were evaluated in more severe criterion. That is, fixing properties test was conducted in the same manner as Example 26 except that additional experiments were made at lower temperature of the heated roller, and the indication of the best results (○) shows lowest fixing temperature of 160°C Preparation of Resin (C-44)

70 parts by weight of resin (A-9) obtained above and 30 parts by weight of resin (A-12) was mixed to obtain resin (A-13). A mixture of 90 parts by weight of the resin (A-13) and 10 parts by weight of resin (B-1) was fed to a twin screw kneader at a flow rate of 10 kg/hr and was kneaded at 175°C.

Further, 3.1 parts by weight of tolylene diisocyanate (TDI) was fed to the resulting resin mixture under kneading and delivery. Kneading was continued and then resin (C-44) was obtained. The resulting resin had a Tg of 59.3°C and a Mw/Mn of larger than 3.

### Example 28

100 parts by weight of resin (C-44), 6 parts by weight of carbon black (MA-100, available from MITSUBISHI CHEMICAL INDUSTRIES, LTD.), 1.5 parts by weight of a charge controlling agent (BONTRON E-84, available from ORIENT CHEMICAL CO., LTD.) and 3 parts by weight of polypropylene wax (Biscol 660P, available from SANYO CHEMICAL INDUSTRIES, LTD.) were dispersed each other and mixed in a Henschel mixer. Then the mixture was melted and kneaded at 120°C. in a twin-screw kneader PCM 30 (available from IKEGAKI TEKKO LTD.) to obtain massive toner compositions.

These compositions were granulated with a hammer mill, followed by finely pulverizing them with a jet pulverizer (IDS 2 Type, available from NIPPON NEWMATIC CO., LTD.) and then classifying by airborne classification to obtain toner fine particles having an average particle size of 10 microns (5 *µ*m or less : 3 weight % , 20 *µ*m or more : 2 weight %).

Then, 100 parts by weight of the toner fine particles described above were mixed with 0.5 parts by weight of externally added hydrophobic silica ("Aerosil R-972", trade name; product of Nippon Aerosil Co., Ltd.) in a Henschel mixer to obtain a toner product. The fixing properties, offset-resistant properties and blocking-resistant properties (storage properties) were studied using the toner product. The results are shown in Table 10.

### Example 29

The experiment was conducted in a similar manner to the example 1 except that 97 parts by weight of resin (C-44) and 3 parts by weight of resin (D-1) were used. The results are shown in Table 10.

**Table 10**

| Example/Comparative Examp | le No. | Example 28 | Example 29 |
|---|---|---|---|
| Manufacture of Resin C | Resin C Type | C-44 | C-44 |
| | Resin A conbination | A-9/A-12 | A-9/A-12 |
| | Resin A composition (weight part) | 70/30 | 70/30 |
| | Resin A hydroxyl value (mgKOH/g) | 33.6 | 33.6 |
| | Resin B type | B-1 | B-1 |
| | A/B (weight part) | 90/10 | 90/10 |
| Manufacture of Binder Resin | Resin C type | C-44 | C-44 |
| | Resin D (styrenic resin) | --- | D-1 |
| | C/D (weight part) | 100/0 | 97/3 |
| fixing properties | | ○ | ○ |
| offset-resistant properties | | ○ | ○ |
| blocking-resistant properties | | ○ | ○ |

It was revealed that the toner of this invention has an excellent performance, that is the lowest fixing temperature of equal or less than 160°C, while keeping good offset-resistant properties and blocking-resistant properties.

## Claims

1. A binder resin for a toner that contains a polyester resin (E) comprising at least
- a structural unit having a polyester structure (A),
- a structural unit derived from a styrene type resin (B),
- a structural unit derived from an epoxy group (C) and
- a structural unit derived from polyisocyanate (D),
the polyester resin (E) being obtainable by reacting
- 55-99 parts by weight of a polyester type resin (A2), which has an average molecular weight (Mn) of 1,000-50,000, a hydroxyl value of 4-100 mg KOH/g and an acid value of 1-40 mg KOH/g,
- 45-1 parts by weight of an epoxy group containing styrene type resin (B2), which has a number-average molecular weight (Mn) of 1,000-30,000, an epoxy equivalent of 1,000 to 30,000 g/equivalent and a styrene unit content of 35% by weight or more, and
- 0.1-2.5 mole equivalents of polyisocyanate (D2) as isocyanate group for 1 mole equivalent total hydroxyl value of polyester resin (A2).

2. A binder resin for a toner that contains a polyester resin (G) comprising at least
- a structural unit having a polyester structure (A),
- a structural unit derived from a styrene type resin (B),
- a structural unit derived from an epoxy group (C),
- a structural unit derived from polyisocyanate (D), and
- a structural unit derived from wax (F),
the polyester resin (G) being obtainable by reacting
- 55-99 parts by weight of a polyester type resin (A2), which has an average molecular weight (Mn) of 1,000-50,000, a hydroxyl value of 4-100 mg KOH/g and an acid value of 1-40 mg KOH/g,
- 45-1 parts by weight of an epoxy group containing styrene type resin (B2), which has a number-average molecular weight (Mn) of 1,000-30,000, an epoxy equivalent of 1,000 to 30,000 g/equivalent and a styrene unit content of 35% by weight or more,
- 1-13 parts by weight of wax (F2) with respect to 100 parts by weight of the polyester type resin (A2) and the epoxy group containing styrene type resin (B2), and
- 0.1-2.5 mole equivalents of polyisocyanate (D2) as isocyanate group for 1 mole equivalent total hydroxyl value of polyester resin (A2).

3. The binder resin for a toner according to claim 1 or 2, wherein the polyester resin (E) or (G), respectively, has a glass transition temperature of 40-70°C and wherein the molecular weight dispersion (weight-average molecular weight (Mw) divided by the number-average molecular weight (Mn), that is Mw/Mn) of a tetrahydrofuran soluble component is 6 or more.

4. An electrophotographic toner for electrostatic developing comprising a binder resin for a toner as defined in any of claims 1 to 3.

## Patentansprüche

1. Binderharz für einen Toner, das ein Polyesterharz (E) enthält, welches mindestens
- eine Struktureinheit (A) mit Polyesterstruktur,
- eine Struktureinheit (B), die von einem Harz vom Styroltyp abgeleitet ist,
- eine Struktureinheit (C), die von einer Epoxygruppe abgeleitet ist, und
- eine Struktureinheit (D), die von Polyisocyanat abgeleitet ist,
umfaßt,
wobei das Polyesterharz (E) durch Reaktion von
- 55 bis 99 Gew.Teilen eines Harzes vom Polyestertyp (A2) mit einem mittleren Molekulargewicht (Mn) von 1.000-50.000, einem Hydroxylwert von 4-100 mg KOH/g und einem Säurewert von 1-40 mg KOH/g,
- 45 bis 1 Gew.Teilen eines Epoxygruppen enthaltenden Harzes vom Styroltyp (B2) mit einem zahlengemittelten Molekulargewicht (Mn) von 1.000-30.000, einem Epoxyäquivalent von 1.000-30.000 g/Äquivalent und einem Anteil an Styroleinheiten von 35 Gew.% oder mehr, und
- 0,1 bis 2,5 Moläquivalenten an Polyisocyanat (D2) als Isocyanatgruppe pro 1 Moläquivalent des gesamten Hydroxylwertes des Polyesterharzes (A2)
erhältlich ist.

2. Binderharz für einen Toner, das ein Polyesterharz (G) enthält, welches mindestens
- eine Struktureinheit (A) mit Polyesterstruktur,
- eine Struktureinheit (B), die von einem Harz vom Styroltyp abgeleitet ist,
- eine Struktureinheit (C), die von einer Epoxygruppe abgeleitet ist,
- eine Struktureinheit (D), die von Polyisocyanat abgeleitet ist, und
- eine Struktureinheit (F), die von Wachs abgeleitet ist (F),
umfaßt,
wobei das Polyesterharz (G) durch Reaktion von
- 55 bis 99 Gew.Teilen eines Harzes vom Polyestertyp (A2) mit einem mittleren Molekulargewicht (Mn) von 1.000-50.000, einem Hydroxylwert von 4-100 mg KOH/g und einem Säurewert von 1-40 mg KOH/g,
- 45 bis 1 Gew.Teilen eines Epoxygruppen enthaltenden Harzes vom Styroltyp (B2) mit einem zahlengemittelten Molekulargewicht (Mn) von 1.000-30.000, einem Epoxyäquivalent von 1.000-30.000 g/Äquivalent und einem Gehalt an Styroleinheiten von 35 Gew.% oder mehr,
- 1 bis 13 Gew.Teilen Wachs (F2) in Bezug auf 100 Gew.Teile des Harzes vom Polyestertyp (A2) und des Epoxygruppen enthaltenden Harzes vom Styroltyp (B2) und
- 0,1 bis 2,5 Moläquivalenten von Polyisocyanat (D2) als Isocyanatgruppe pro 1 Moläquivalent des gesamten Hydroxylwertes des Polyesterharzes (A2)
erhältlich ist.

3. Binderharz für einen Toner gemäß Anspruch 1 oder 2, wobei das Polyesterharz (E) bzw. (G) eine Glasübergangstemperatur von 40 bis 70°C hat und wobei die Dispersität des Molekulargewichts (gewichtsgemitteltes Molekulargewicht (Mw) geteilt durch zahlengemitteltes Molekulargewicht (Mn), also Mw/Mn) der Tetrahydrofuran-löslichen Komponente 6 oder mehr ist.

4. Elektrofotografischer Toner für elektrostatische Entwicklung, der das Binderharz für einen Toner wie in einem der Ansprüche 1 bis 3 definiert umfaßt.

## Revendications

1. Résine de liant pour un toner qui contient une résine polyester (E) comprenant au moins
- un motif structurel présentant une structure polyester (A),
- un motif structurel dérivé d'une résine de type styrène (B),
- un motif structurel dérivé d'un groupe époxy (C) et
- un motif structurel dérivé de polyisocyanate (D),
la résine polyester (E) pouvant être obtenue par mise en réaction de
- 55-99 parties en poids d'une résine de type polyester (A2) qui présente un poids moléculaire moyen (Mn) de 1 000-50 000, une valeur hydroxyle de 4-100 mg KOH/g et une valeur acide de 1-40 mg KOH/g,
- 45-1 parties en poids d'une résine de type styrène contenant un groupe époxy (B2) qui présente un poids moléculaire moyen en nombre (Mn) de 1 000-30 000, un équivalent époxy de 1 000 à 30 000 g/équivalent et une teneur en motifs styrène de 35 % en poids ou davantage, et
- 0,1-2,5 équivalents molaires de polyisocyanate (D2) en tant que groupe isocyanate pour 1 équivalent molaire de valeur hydroxyle totale de résine polyester (A2).

2. Résine de liant pour un toner qui contient une résine polyester (G) comprenant au moins
- un motif structurel ayant une structure polyester (A),
- un motif structurel dérivé d'une résine de type styrène (B),
- un motif structurel dérivé d'un groupe époxy (C),
- un motif structurel dérivé de polyisocyanate (D), et
- un motif structurel dérivé de cire (F),
la résine polyester (G) pouvant être obtenue par mise en réaction de
- 55-99 parties en poids d'une résine de type polyester (A2) qui présente un poids moléculaire moyen (Mn) de 1 000-50 000, une valeur hydroxyle de 4-100 mg KOH/g et une valeur acide de 1-40 mg KOH/g,
- 45-1 parties en poids d'une résine de type styrène contenant un groupe époxy (B2) qui présente un poids moléculaire moyen en nombre (Mn) de 1 000-30 000, un équivalent époxy de 1 000 à 30 000 g/équivalent et une teneur en motifs styrène de 35 % en poids ou davantage,
- 1-13 parties en poids de cire (F2) par rapport à 100 parties en poids de la résine de type polyester (A2) et la résine de type styrène contenant un groupe époxy (B2), et
- 0,1-2,5 équivalents molaires de polyisocyanate (D2) en tant que groupe isocyanate pour 1 équivalent molaire de valeur hydroxyle totale de résine de polyester (A2).

3. Résine de liant pour un toner selon la revendication 1 ou 2, dans laquelle la résine polyester (E) ou (G), respectivement, présente une température de transition vitreuse de 40-70°C et dans laquelle la dispersion de poids moléculaire (poids moléculaire moyen en poids (Mw) divisé par le poids moléculaire moyen en nombre (Mn), c'est-à-dire Mw/Mn) d'un composant soluble de tétrahydrofuranne est de 6 ou davantage.

4. Toner électrophotographique pour le développement électrostatique comprenant une résine de liant pour un toner tel que défini dans l'une quelconque des revendications 1 à 3.
